# EUROPEAN PATENT SPECIFICATION

(11) **EP 4 572 911 B1**
(45) Date of publication and mention of the grant of the patent: **25.11.2026**
(21) Application number: 23764704.5
(22) Date of filing: 09.08.2023
(51) Int. Cl.: B23P 21/00, B23P 19/04, E05D 3/14, E05D 11/10, E05F 5/00

(54) **METHOD FOR ASSEMBLING A MULTICOMPONENT ITEM, ASSEMBLY STATION AND ASSEMBLY LINE**
VERFAHREN ZUM BESTÜCKEN EINES MEHRKOMPONENTENARTIKELS, BESTÜCKSTATION UND BESTÜCKSTRASSE
PROCÉDÉ DE MONTAGE D'UN ARTICLE À PLUSIEURS COMPOSANTS, POSTE DE MONTAGE ET CHAÎNE DE MONTAGE

(30) Priority: 18.08.2022 IT 202200017397
(43) Date of publication of application: 25.06.2025
(73) Proprietor: Cosberg S.p.A., 24030 Terno D'Isola (Bergamo) (IT)
(72) Inventor: VISCARDI, Gianluigi Carlo, 24030 Terno d'Isola, Bergamo (IT)
(74) Representative: Crippa, Paolo Ernesto
(86) International application number: PCT/IB2023/058039
(87) International publication number: WO 2024/038354

(56) References cited:
- WO-A1-2014/177985
- WO-A1-2018/029559
- WO-A1-2018/029563
- CN-A- 112 247 554
- CN-A- 113 857 847
- DE-A1- 4 102 899

## Description

### Field of application

The present invention relates to a method for assembling multicomponent items, an assembly station, and an assembly line. The present invention is applied, in particular but not exclusively, in the assembly of hinges for furniture doors.

In the field of plants for assembling multicomponent items, it is necessary for the machines to be capable of manufacturing increased volumes in a short time. Indeed, only in the presence of such features may the cost of the plant be amortized in a short time and the investment be remunerative.

Therefore, in the field of manufacturing machines for such plants, the tendency exists to create increasingly fast lines, at times capable of manufacturing tens of thousands of items a day.

It is thus essential to improve the individual assembly stations of a line so as to optimize the assembly processes in each station to obtain improved productivity of the individual station, which has a positive effect on the production capacity of the entire line.

Disadvantageously, assembly lines for multicomponent items of the background art do not allow achieving increased levels of productivity, which are required today to meet the current market needs. A known assembly line is disclosed in document CN 112247554 A.

Moreover, disadvantageously assembly plants for multicomponent items of the background art are capable of performing one assembly operation alone for each stationary status of the component receiving the assembly, where stationary status means the status in which the receiving component, e.g., the wing of a hinge, for example placed on a grabbing device (e.g., a pallet or a laying base) remains available for a same assembly station without undergoing operations and/or moving. In other words, the stationary status of a component (and hence preferably also of the related grabbing device) indicates the same remaining in the same assembly station.

For example, without losing in generality, in the stationary status, the component actually remains stationary in the assembly station, for example when this is placed on a pallet which slides along an assembly line, and stops close to the station, or it is kept in movement, for example, when the receiving component is placed on a rotary table or on a laying station, but it remains in the same assembly status.

Therefore, known assembly lines generally provide several series of individual assembly stations, each being associated with a respective stationary status in which the component receives in assembly one single component at a time and is involved in each assembly operation.

This disadvantageously affects the length of the assembly line and the use of excessive resources to create each station, with apparent disadvantages in terms of overall volumes within the production sites, clearly in addition to the production times of each individual multicomponent item which must cross many stations before being terminated.

### Solution of the invention

Therefore, the need is strongly felt to provide an assembly method, an assembly station and an assembly line for multicomponent items capable of overcoming the drawbacks typical of the background art and which meet the production needs of the industry.

In particular, it is an object of the present invention to accelerate the assembly operations of a multicomponent item, e.g., a hinge.

Moreover, it is the object of the present invention to also simplify the assembly operations so as to increase the production volumes, time of the multicomponent item assembly stations according to the background art being equal.

It is a further object of the present invention to increase the flexibility of the line, i.e., to adapt the assembly line quickly and automatically to construction variants of the multicomponent item, thus only affecting the sub-steps of the assembly, without acting on the development of the main line.

Such a need is met by a method for assembling multicomponent items, by an assembly station and by an assembly line according to the appended independent claims. The claims dependent thereon describe preferred or advantageous embodiments of the invention, involving further advantageous aspects.

### Description of the drawings

The features and advantages of the present invention will become however apparent from the following description of some preferred embodiments thereof, given by way of non-limiting indication, with reference to the accompanying drawings, in which:
- Figure 1 shows a perspective view of a multicomponent item according to an embodiment of the present invention, in which the multicomponent item is a hinge;
- Figure 2a shows a perspective view of a multicomponent item according to an embodiment of the present invention, in which a rivet in insertion position is shown;
- Figure 2b shows the same perspective view of the component item Figure 2a, in which the rivet is shown in inserted position;
- Figure 3 shows a perspective view of a joint assembly for a multicomponent item according to an embodiment of the present invention;
- Figure 4a shows a first sub-assembly for assembling a joint assembly in an embodiment of the present invention;
- Figure 4b shows a second sub-assembly for assembling a joint assembly in an embodiment of the present invention;
- Figure 5 shows an exploded view of the components (a, b, c, d) forming the joint assembly according to the example in Figure 3, and of a rivet (e) suitable for connecting said joint assembly in an articulated manner together with a receiving component to form a multicomponent item in an embodiment of the present invention;

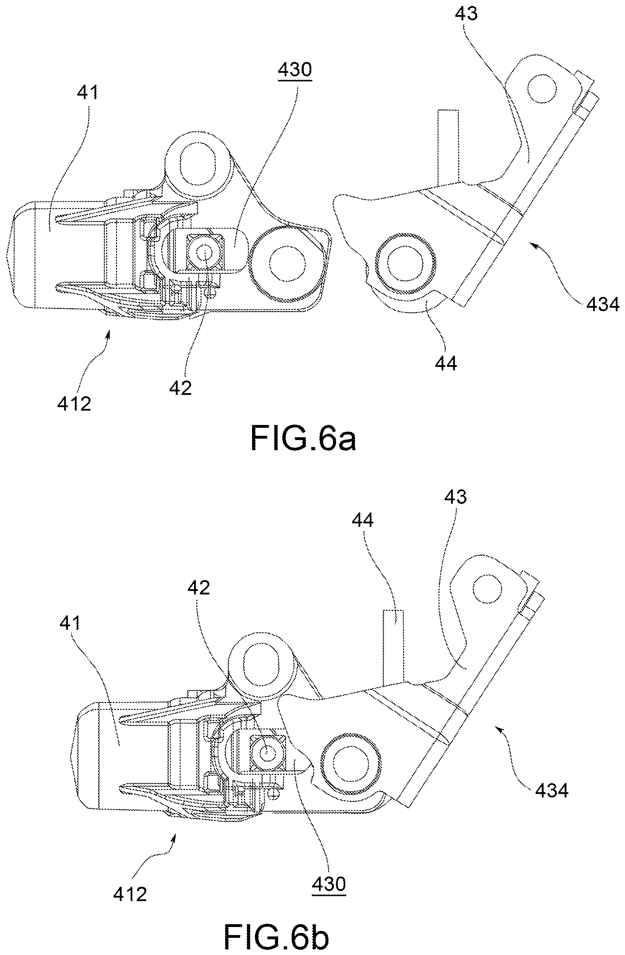

- Figure 6a shows a side elevation view of a first sub-assembly and a second sub-assembly assemblable with each other to form a joint assembly, in an embodiment of the present invention;
- Figure 6b shows a side elevation view of a joint assembly in assembled format, comprising the sub-assemblies in Figure 6a;
- Figure 7 shows a diagrammatic perspective view of a grabbing device on which a receiving component according to an embodiment of the present invention is housed;
- Figure 8 shows a diagrammatic perspective view of a grabbing device on which a previously assembled multicomponent item is housed, in an embodiment of the present invention;
- Figure 9 shows a diagrammatic perspective view of an assembly station comprising a first and second manipulator arm according to an embodiment of the present invention, in which the first sub-assembly and the second sub-assembly are in mutual assembly position;
- a Figure 10 shows a front elevation view of an enlargement of the assembly station in Figure 9;
- Figure 11 shows a perspective view of an assembly station according to an embodiment of the present invention, in which the first and second sub-assemblies are assembled to form a joint assembly and are in suspended-in-air position;
- Figure 12 is a front elevation view of the assembly station in Figure 11;
- Figure 13 is a perspective enlargement view of an assembly station according to an embodiment of the present invention;
- Figure 14a shows a front view of a first sub-assembly and a second sub-assembly in suspended-in-air position above a grabbing device carrying a receiving component, according to an embodiment of the present invention, in which said first and second sub-assemblies are in a mutual assembly position;
- Figure 14b shows the same embodiment depicted in Figure 14a, in which said first and second sub-assemblies are in assembled position and form a joint assembly;
- Figure 15 shows a perspective view of an assembly station according to an embodiment of the present invention, comprising a riveting apparatus;
- Figure 16 shows an enlarged perspective view of the assembly station in Figure 15;
- Figure 17 shows a perspective assembly view of an assembly station according to an embodiment of the present invention;
- Figure 18 shows a perspective view of a first pre-assembly group of an assembly station according to an embodiment of the present invention;
- Figure 19 shows an enlarged detailed view of a portion of the first assembly group in Figure 18, showing, in particular, a third manipulator arm, a rotary table and a greasing station of the first pre-assembly group;
- Figure 20a shows a perspective view of a third manipulator arm according to an embodiment of the present invention;
- Figure 20b shows a front view of the third manipulator arm in Figure 20a;
- Figure 21 shows an enlarged perspective view of a greasing station of the first pre-assembly group according to an embodiment of the present invention;
- Figure 22 shows a perspective view of a rotary table of the first pre-assembly group according to an embodiment of the present invention;
- Figure 23 shows a perspective view of a second pre-assembly group of an assembly station according to an embodiment of the present invention;
- Figure 24 shows a front view of a portion of the first pre-assembly group which shows a second manipulator arm according to an embodiment of the present invention.

### Detailed description

With reference to the aforesaid drawings, reference numeral 9 indicates as a whole an assembly station 9 for multicomponent items 4.

Multicomponent items means items consisting of a variety of components assembled with one another to form the final multicomponent item.

In particular, according to an example, the multicomponent item 4 is a hinge 4.

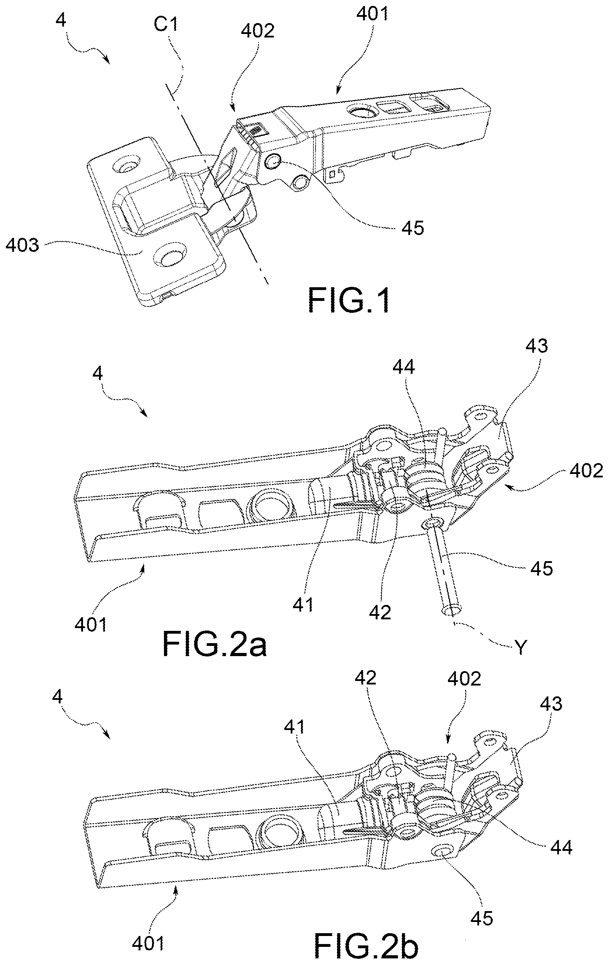

With reference to Figure 1, the multicomponent item 4 is a hinge for furniture doors, according to a first example. Preferably, according to such an example, the multicomponent item 4 is a "slide-on" type of hinge.

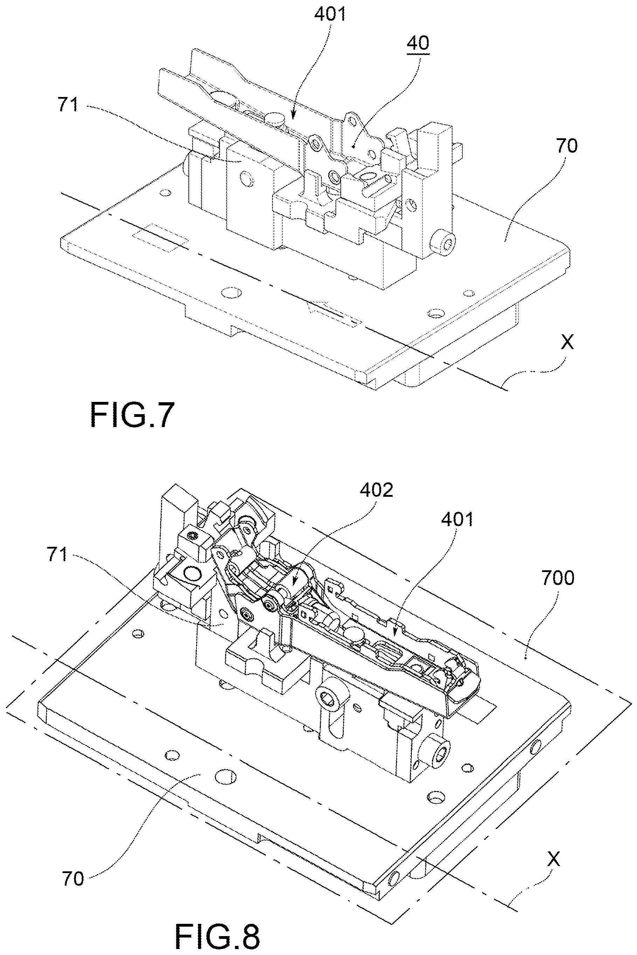

The multicomponent item 4 is made at least by means of the assembly of a receiving component 401 and a joint assembly 402. In particular, with reference to Figure 7, a receiving seat 40 suitable for accommodating the joint assembly 402 is obtained in the receiving component 401.

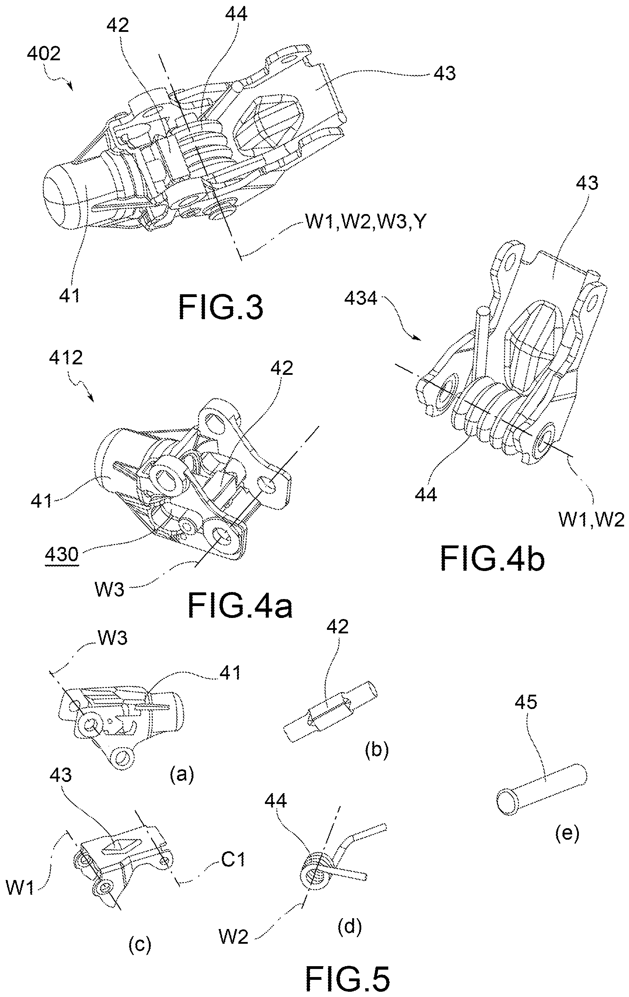

With reference to Figures 3, 4a and 4b, joint assembly 402 means an assembly formed by at least a first sub-assembly 412 and a second sub-assembly 434. Said first sub-assembly 412 comprises at least two components 41, 42, and said second sub-assembly 434 comprises one component 43 alone, or at least two components 43, 44.

With reference to Figure 3, in an embodiment, joint assembly 402 in the present disclosure means an assembly comprising a plurality of components 41, 42, 43, 44.

In a constructional variant, when assembled, the multicomponent item 4 also comprises one or more auxiliary components 403.

The present invention relates to a method for assembling multicomponent items 4 comprising a plurality of components 41, 42, 43, 44, 401.

Said assembly method comprises the following steps:
a) providing a first sub-assembly 412 comprising at least a first 41 and a second 42 component, and a second sub-assembly 434 comprising at least a third component 43;
b) picking, by means of a first manipulator arm 1 and a second manipulator arm 2, the first sub-assembly 412 and the second sub-assembly 434, respectively, and bringing them to a mutual assembly position, where said first sub-assembly 412 is in an assembly position with said second sub-assembly 434;
c) assembling, by means of said first 1 and second 2 manipulator arms, the first sub-assembly 412 with the second sub-assembly 434 to form a joint assembly 402;
d) sending, on an electronic control unit, a synchronous translation signal to the first 1 and second 2 manipulator arms;
e) actuating, as a function of said synchronous translation signal, the synchronous translation of said first 1 and second 2 manipulator arms, and bringing said joint assembly 402 to a respective receiving seat 40 obtained in a receiving component 401.

In an embodiment, the second sub-assembly 434 comprises at least two components 43, 44, and the assembly method comprises, prior to step a), the following steps:
a0) providing a first pre-assembly group 91;
a01) providing a second pre-assembly group 92;
a1) assembling at least a first component 41 and a second component 42 to each other in the first pre-assembly group 91 to form the first sub-assembly 412;
a11) assembling at least a third component 43 and a fourth component 44 to each other in the second pre-assembly group 92 to form the second sub-assembly 434.

In an advantageous constructional variant, the pre-assembly of the first sub-assembly 412 and the second sub-assembly 434 occurs simultaneously.

In an advantageous embodiment, steps a1) and a11) terminate simultaneously. I.e., according to such an embodiment, the first sub-assembly 412 and the second sub-assembly 434 become available for the subsequent assembly to form the joint assembly 402 simultaneously.

In other words, the first pre-assembly group 91 is suitable for finishing the pre-assembly of said two or more components 41, 42, 43, 44 simultaneously to the second pre-assembly group 92. I.e., the first and second pre-assembly groups 91, 92 reach the end of the pre-assembly of the respective sub-assemblies 412, 434 together.

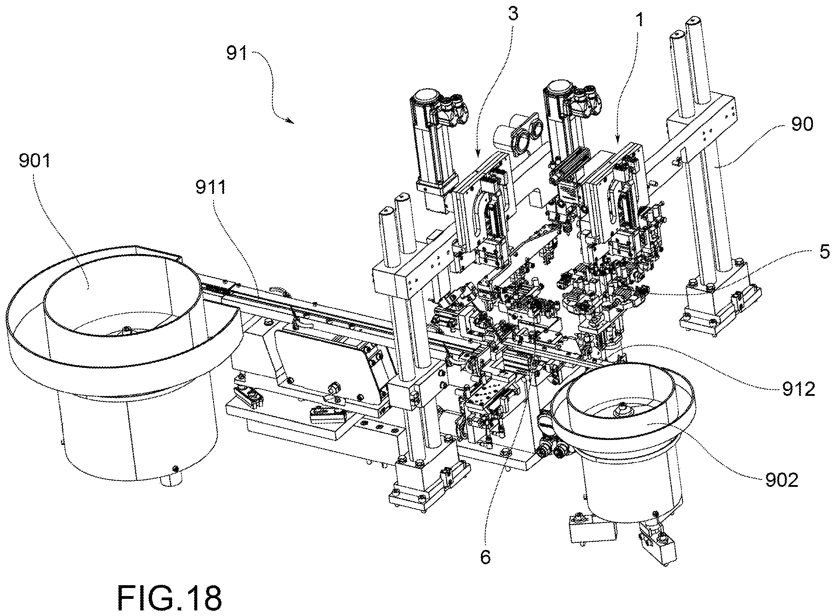

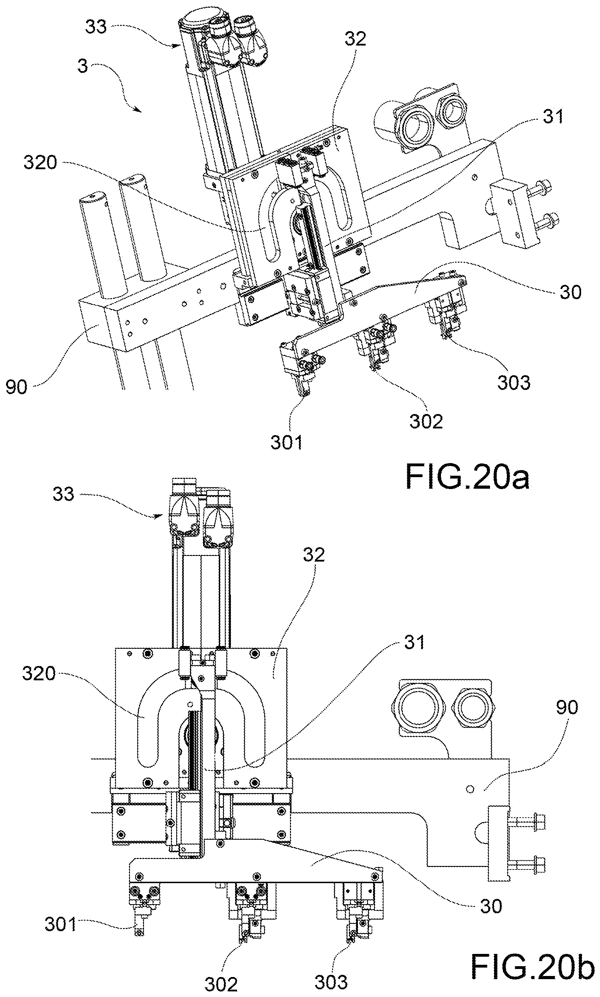

In an advantageous embodiment and with reference to Figures 18 to 20b, the first pre-assembly group 91 comprises a third manipulator arm 3 suitable for pre-assembling the first component 41 and the second component 42 to each other to form the first sub-assembly 412.

In a preferred embodiment, one or more of said first, second and third manipulator arms 1, 2, 3 are pick and place robots. For example, the structural and functional features of said first, second and third manipulator arms 1, 2, 3 are illustrated in documents WO2014/177985 and WO2014/177979 to the Applicant.

In a preferred embodiment, the third manipulator arm 3 comprises a guiding wall 32 in which a guiding groove 320 is obtained. The third manipulator arm 3 further comprises an arm 31 and a gripper-holder group 30 sustained by said arm 31 and integral therewith.

In a particularly advantageous embodiment, the gripper-holder group of the third manipulator arm sustains three grippers, i.e., the first gripper 301, a second gripper 302, and a third gripper 303.

In such an embodiment, step a1) of the assembly method comprises the following sub-steps:
m) picking, by means of the first gripper 301, said first component 41 and bringing it to a second component insertion zone;
n) assembling said second component 42 with said first component 41 in said second component insertion zone to form the first sub-assembly 412;
o) picking, by means of the second gripper 302, said first sub-assembly 412 and bringing it to a greasing station 6;
p) greasing said first sub-assembly 412 in said greasing station 6;
q) picking, by means of the third gripper 303, said greased first sub-assembly 412 from the greasing station 6 and bringing it to a standby station 50 to be picked by the first manipulator arm 1.

Advantageously, in such an embodiment, the third manipulator arm 3 is suitable for simultaneously performing three operations which contribute to assembling the first sub-assembly 412.

Indeed, in a preferred embodiment, the three grippers 301, 302, 303 move integrally with one another.

Therefore, in such an embodiment, the first gripper 301, the second gripper 302 and the third gripper 303 are suitable for simultaneously performing three separate operations in a single movement of the third manipulator arm 3, preferably in the movement of the third manipulator arm 3 in a single direction.

The movement of the third manipulator arm 3 in the direction opposite to said single direction is a return operation which brings the grippers 301, 302, 303 back to the position initially occupied thereby.

In an advantageous embodiment, the second manipulator arm 2 is suitable both for pre-assembling the third component 43 and the fourth component 44 to form the second sub-assembly 434, and for picking the second pre-assembled sub-assembly 434 and assembling it to the first sub-assembly 412, preferably by the assembly method of the present invention.

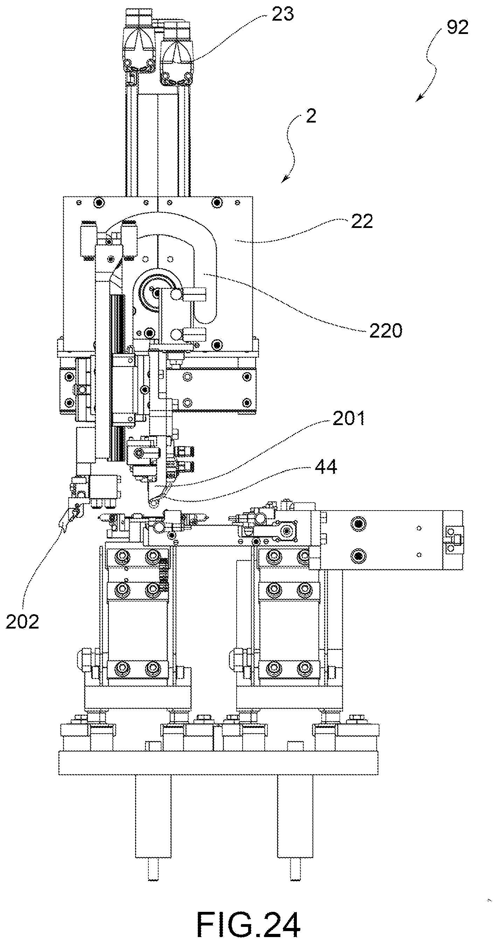

In a constructional variant, for example, with reference to Figure 24, the second manipulator arm 2 comprises a first gripper 201 suitable for being actuated to open and close so as to grab the fourth component 44 in the picking zone and transport it and position it in the third component 43.

Moreover, in a preferred embodiment, the second manipulator arm 2 comprises two grippers, i.e., the first gripper 201 described above, and a second gripper 202, which are sustained by the gripper-holder group 20.

In an embodiment, the first gripper 201 and the second gripper 202 are not integral with each other during motion.

The second gripper 202 is suitable for picking the second sub-assembly 434 and assembling it together with the first sub-assembly 412, preferably by the assembly method of the present invention.

Preferably, the first gripper 201 and the second gripper 202 of the second manipulator arm 2 are suitable for operating simultaneously on two consecutive second sub-assemblies 434. That is, the second gripper 202 is suitable for operating on a second sub-assembly 434 once pre-assembled by means of the first gripper 201.

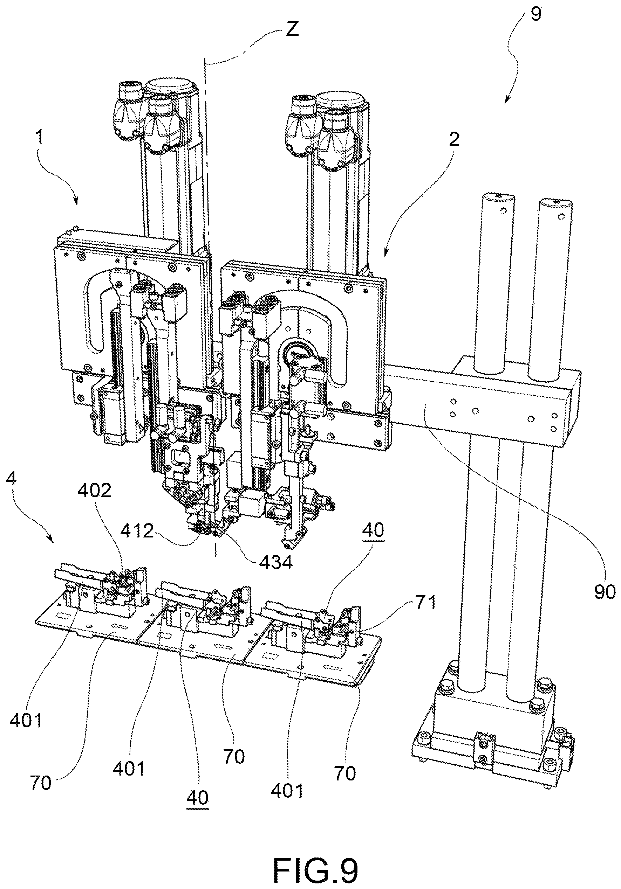

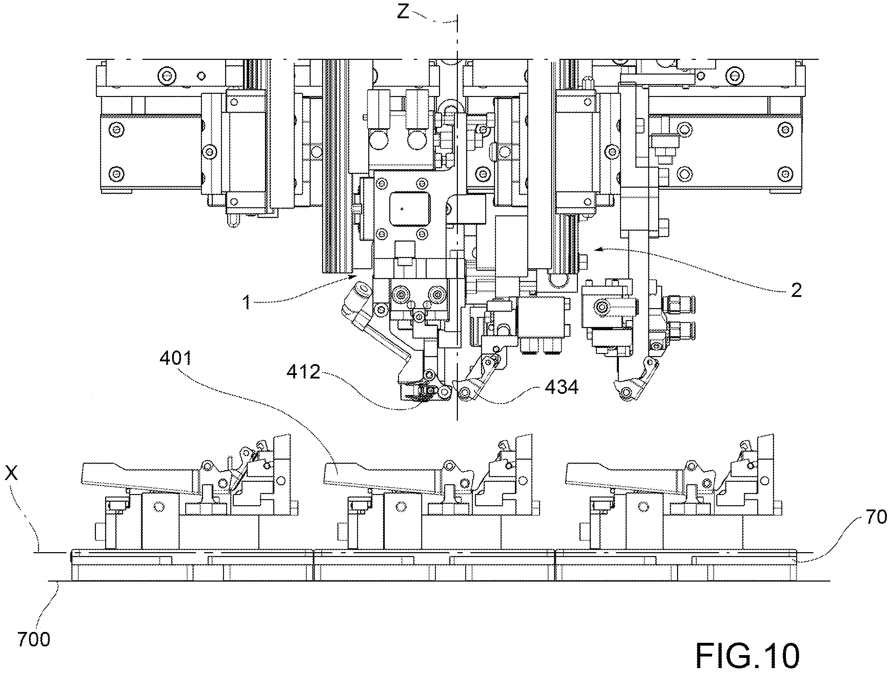

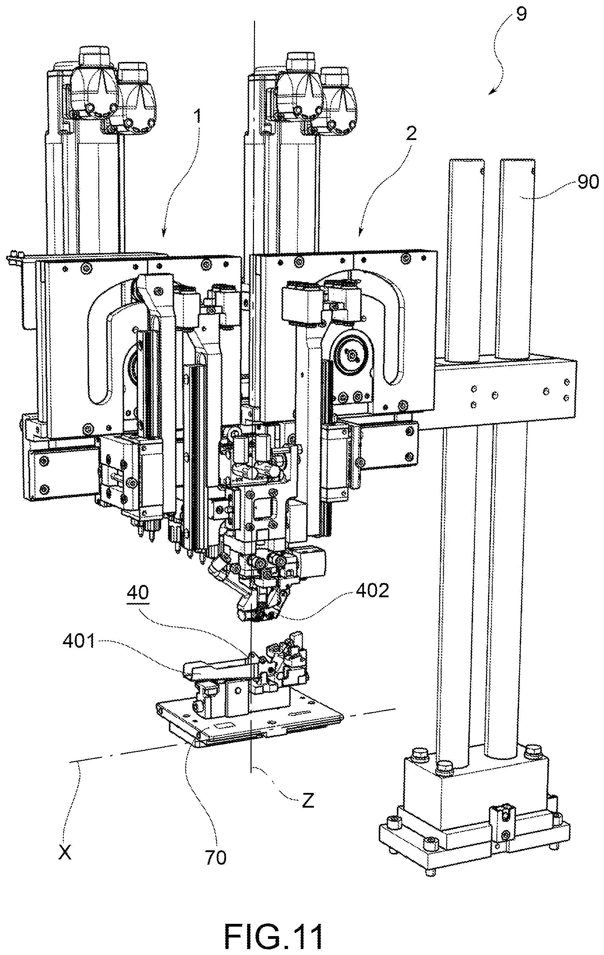

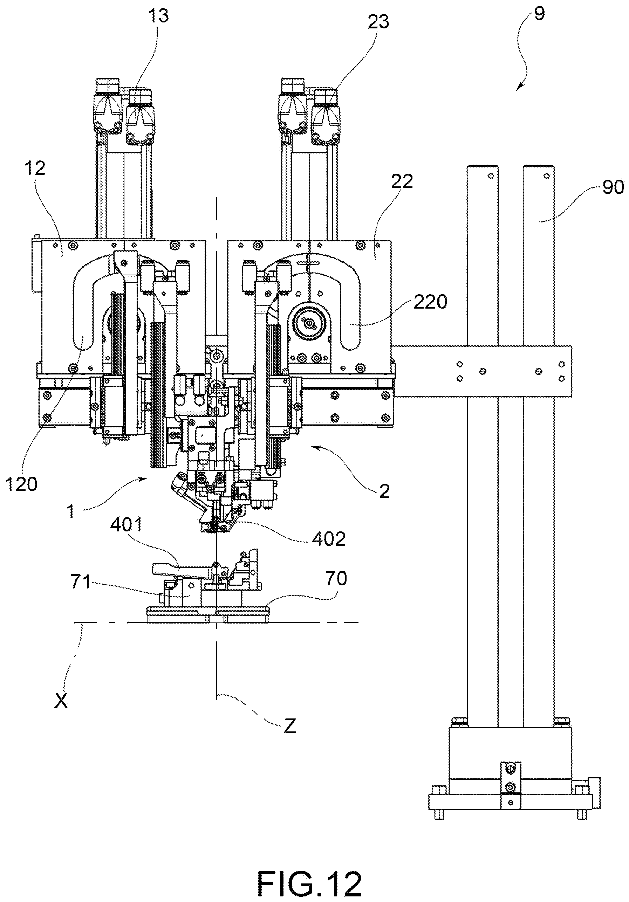

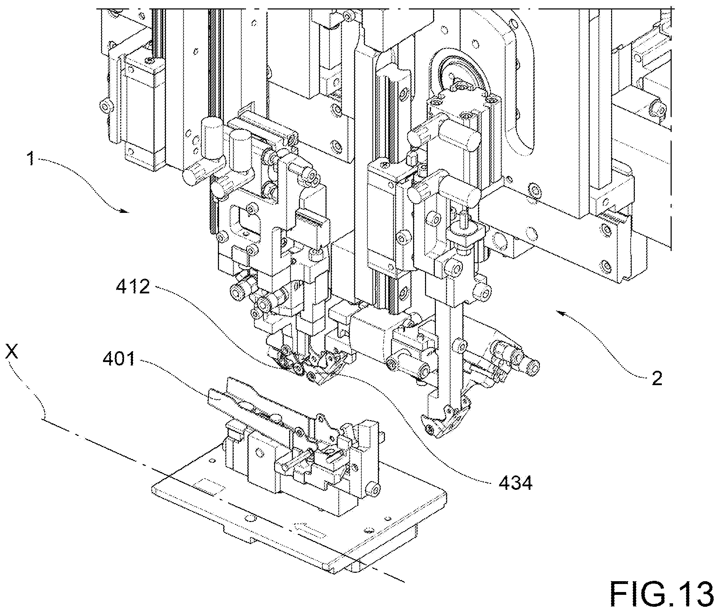

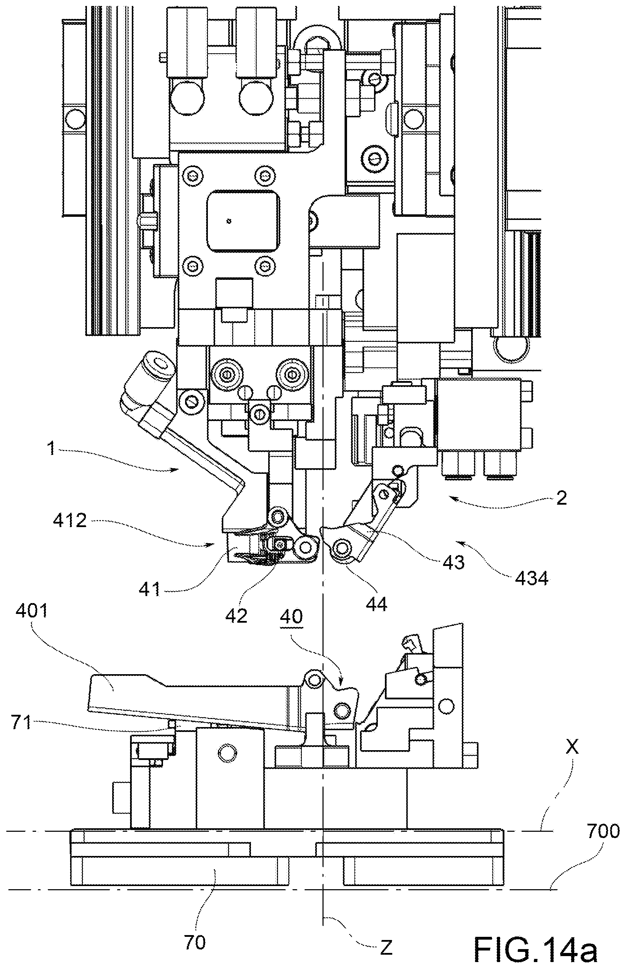

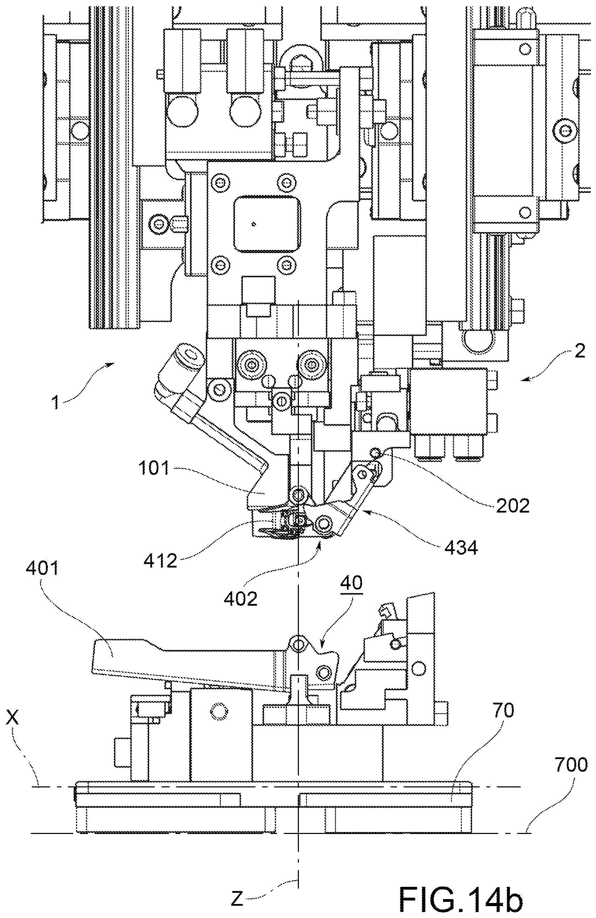

In an advantageous embodiment, for example, as shown in the embodiments shown in Figures 9 to 14b, step b) and step c) are performed while keeping the first sub-assembly 412 and the second sub-assembly 434 in a suspended-in-air position, i.e., avoiding contact with any support other than said first and second manipulator arms 1, 2.

Advantageously, such an embodiment allows decreasing the volumes of the assembly station, the provision of a supporting seat or a specific stationary station in which to assemble the first sub-assembly 412 with the second sub-assembly 434 not being required.

Moreover, such an embodiment allows increasing the productivity of the line, making the joint assembly 402 directly available for subsequent assembly operations of the multicomponent item.

According to a yet further advantage, providing an assembly in a suspended-in-air position allows operating more easily only on the necessary components, without requiring a receiving component 401, e.g., a wing 401 of a hinge 4, always present as a support base for each assembly. This also allows simplifying the groups suitable for performing the assembly and automatically and more flexibly managing the control systems of the manipulators involved in the working steps.

In a particularly advantageous embodiment, the first and the second manipulator arms 1, 2 are suitable for being temporarily constrained to each other. In particular, according to such an embodiment, such manipulator arms 1, 2 are suitable for integrally translating towards the receiving seat 40.

In particular, according to such an embodiment, step e) of the assembly method comprises the following sub-steps:
e0) constraining the first 1 and second 2 manipulator arms to each other so as to make them integral in translation;
e1) actuating in translation at least one of said first and second manipulator arms 1, 2 to drag the other of said first and second manipulator arms 1, 2 and the joint assembly 402 in translation towards the receiving component 401.

Such an embodiment allows significantly saving on the resources which would be required to bring the sub-assemblies 412 and 434 separately towards a common final assembly area, for example, to bring them separately to the receiving seat 40.

Advantageously, it is thus sufficient to bring power to only one of said manipulator arms to allow the descent of the already assembled joint assembly 402 to the receiving seat 40.

In an embodiment further covered by the present disclosure, step e) includes actuating in translation both said first 1 and second 2 manipulator arms, i.e., translating both the manipulators arms 1 and 2 with power.

In an embodiment, the manipulator arms 1 and 2 are suitable for being actuated in translation individually, maintaining a mechanical and motion separation therebetween.

Preferably, even in such an embodiment, said first 1 and second 2 manipulator arms are suitable for being actuated in translation in a synchronous manner.

In a constructional variant, the receiving component 401, at least when performing steps a) to e), is positioned on a grabbing device 70, preferably a pallet 70 or a rotary table.

In other words, a receiving component 401 is positioned on said grabbing device 70, comprising a receiving seat 40 suitable for receiving in assembly said previously assembled joint assembly 402.

For simplicity and intelligibility, in the continuation of the present description, reference will be made to the grabbing device 70 by the term pallet 70, but it is clear that the present disclosure also applies to the constructional variant in which the grabbing device 70 is a rotary table.

In an embodiment, with reference to the example in Figure 7 or 8, pallet 70 preferably rests on a work surface 700, preferably parallel to the ground surface.

In the present disclosure, "ground surface" means an imaginary plane which identifies the base, ground or floor on which the assembly station is placed. "Ground surface" is the floor of a production site, for example.

Moreover, the grabbing device 70 preferably comprises a supporting seat 71 suitable for stably accommodating a receiving component 401 so that the receiving seat 40 faces upwards, i.e., faces the opposite side with respect to the work surface 700.

In an embodiment, the method for assembling multicomponent items is performed by means of an assembly station 9.

Preferably, the assembly station 9 is inserted in an assembly line comprising a transport system for feeding the item in assembly to pallet 70 along a substantially straight feeding direction X substantially parallel to the work surface 700.

Therefore, according to such an embodiment, pallet 70 travels horizontally on an imaginary transport plane, parallel to the ground surface, taken as reference. The feeding direction X is thus contained within the imaginary transport plane.

In other words, pallet 70 travels along said feeding direction X and stops on the work surface 700 of the assembly station 9, bringing the receiving component 401 to a stationary status, in which the receiving component 401 is available to the assembly station 9 and remains stationary and/or in the same assembly status during the steps of the method according to the invention.

In an embodiment, when the receiving component 401 is in a stationary status, pallet 70 is not moving along said feeding direction X, i.e., it is kept temporarily stationary close to the assembly station 9.

In an advantageous embodiment, all the steps listed in each embodiment occur while the receiving component 401 is in stationary status, i.e., in the same assembly status and/or in the same position.

This advantageously allows the assembly line to be shortened, concentrating a plurality of operations in a single position of the receiving component 401. Countless advantages result from such an aspect in terms of reducing overall plant volumes, increasing line productivity, and the production feeding speed.

In an advantageous embodiment, with reference to the example in Figure 7, the receiving component 401 is positioned on pallet 70 so that the receiving seat 40 faces upwards, i.e., the opposite side with respect to the work surface 700. In other words, in such an embodiment, the receiving component 401 lies on pallet 70, the receiving seat 40 facing upwards. Therefore, in such an embodiment, the receiving seat 40 is suitable for receiving a joint assembly 402 arriving from the top.

Such a positioning allows the manipulator arms 1, 2 to easily reach the receiving seat 40.

In an embodiment, the manipulator arms 1, 2 support the previously assembled joint assembly 402 in a suspended-in-air position which is above, i.e., spaced vertically from, said receiving seat 40. Accordingly, in such an embodiment, to reach the receiving seat 40, the manipulator arms 1, 2 need to translate along a vertical direction Z, towards the bottom, i.e., to operate a descent.

According to such an embodiment, step g) consists in bringing the joint assembly 402 from the suspended-in-air position to said receiving seat 40. Preferably, such a step g) is performed by means of the same first and second manipulator arms 1, 2.

In an advantageous embodiment, the translation of the manipulator arms 1, 2 towards the receiving seat 40 occurs at least along a vertical direction Z, perpendicular to the work surface 700. According to such an embodiment, step e) further consists in the synchronous descent of each manipulator arm 1, 2 along said vertical direction Z towards said pallet 70 and in the placement from the top of the joint assembly 402 in the receiving seat 40.

In an embodiment, the first manipulator arm 1 and the second manipulator arm 2 are suitable for engaging each other, e.g., by geometrical interlocking.

In a preferred embodiment, the first manipulator arm 1 comprises at least a first arm constraining portion and the second manipulator arm 2 comprises at least a second arm constraining portion. Such first and second arm constraining portions are suitable for being mutually engaged to constrain said first and second manipulator arms 1, 2 to each other, i.e., for making said first and second manipulator arms 1, 2 integral in translation.

Preferably, step e0) of the assembly method includes geometrically constraining the first 1 and second 2 manipulator arms by means of the mutual engagement between said first and second arm constraining portions.

According to a further embodiment, a "master-slave" type control system is applied to said first and second manipulator arms 1, 2 so that, for example, when the second manipulator arm 2 is actuated in translation, also the first manipulator arm 1 is dragged in translation, or vice versa. That is, only one of the two manipulator arms 1, 2 is actuated in translation with power by means of a respective actuation group 13, 23, while the other undergoes the translation in an integral manner due to the dragging caused by the mutual engagement between the respective constraining portions of the first 1 and second 2 arms.

In an embodiment, when assembled, the joint assembly 402 and the receiving component 401 form one or more rivet insertion seats suitable for accommodating one or more rivets 45 for connecting the joint assembly 402 in an articulated manner to the receiving component 401. According to such an embodiment, the assembly method comprises, after step e), the following operating steps:
h) providing a riveting apparatus 8 comprising a riveting machine 81, and feeding said riveting apparatus 8 with one or more rivets 45;
i) hinging, by means of said riveting machine 81, the joint assembly 402 in the receiving component 401 by means of the insertion of said one or more rivets 45 in said one or more rivet insertion seats.

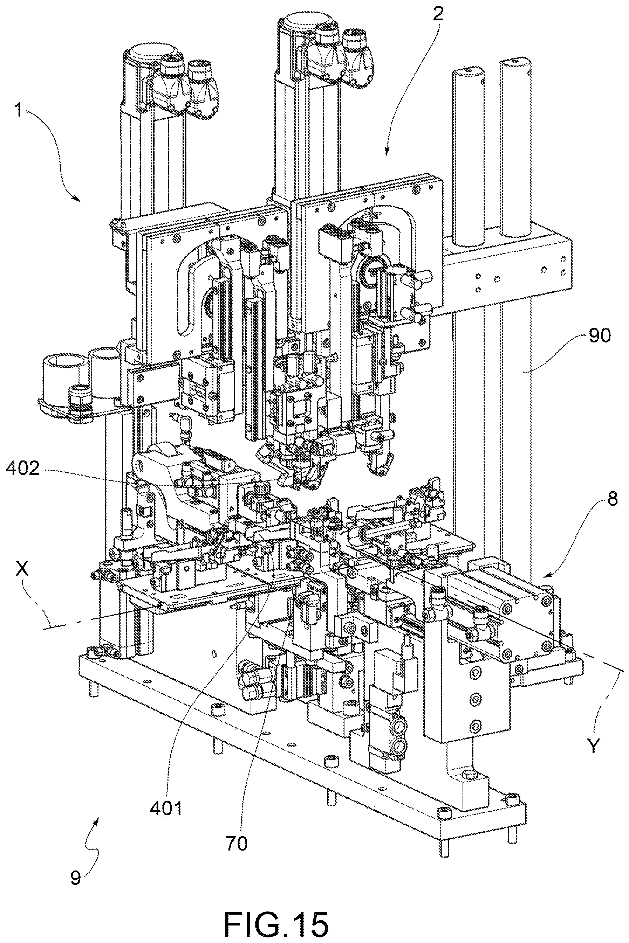

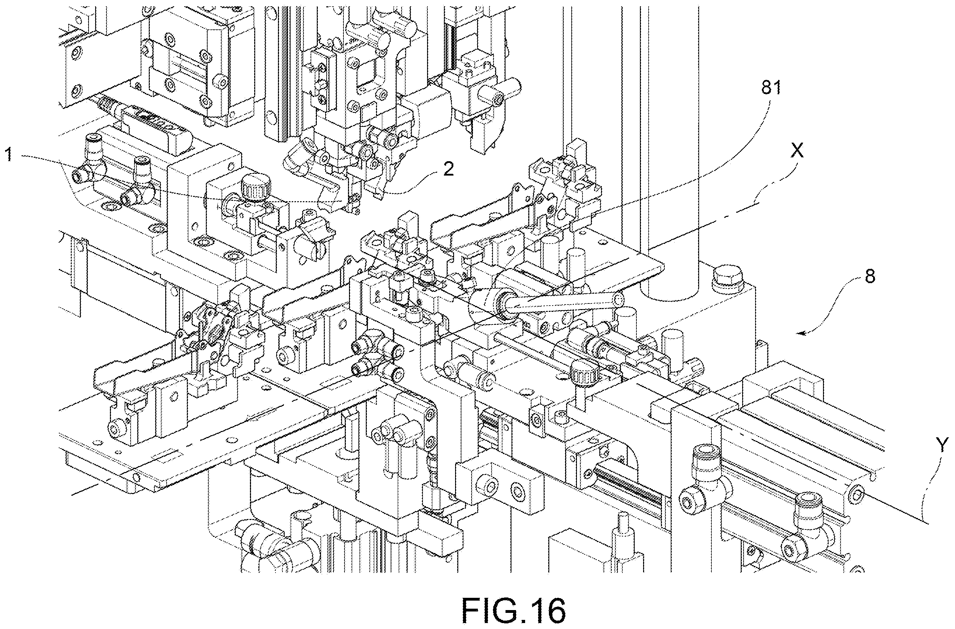

Preferably, with reference to Figures 15 and 16, the riveting apparatus 8 is placed at the pallet 70 carrying the receiving component 401 in stationary status.

Moreover, the method preferably comprises, prior to steps a0) and a01), the following component feeding step:
x) feeding the first pre-assembly group 91 and the second pre-assembly group 92 with the respective components 41, 42, 43, 44 by means of respective feeding devices 901, 902, 903, 904.

For clarity of disclosure and to favor the intelligibility of the present invention, the present invention will now be described in detail with reference to a hinge 4 and the components thereof. However, it is apparent that the present invention relates to an assembly method and an assembly station for a general multicomponent item consisting of a plurality of components 41, 42, 43, 44, 401.

According to the example of a hinge 4, the receiving component 401 is a wing 401 intended to be applied to the wall of a piece of furniture.

According to the example of hinge 4, the joint assembly 402 comprises the following components: a damper 41, a pin 42, preferably a square pin, a connecting rod 43 and a spring 44.

When accommodated in the receiving seat 40, the joint assembly 402 is hingeable, i.e., connectable in an articulated manner, to the receiving component 401 by means of the insertion of one or more rivets 45. The position of such one or more rivets 45 is illustrated in greater detail in the continuation of the present disclosure.

The components of the joint assembly 402 and a rivet 45 are each shown individually in Figure 5 according to the constructional variant in which the multicomponent item is a hinge 4 of the "slide-on" type.

In particular, according to such a variant, damper 41, the connecting rod 43 and spring 44 each comprise a hole, each hole having a hole axis W1, W2, W3, respectively.

In assembly position, damper 41, the connecting rod 43 and spring 44 are positioned so that the respective hole axes W1, W2, W3 are aligned along a common alignment direction.

Similarly, wing 401 comprises a rivet hole having a rivet insertion axis Y.

In final assembly, the components 41, 42, 43, 44 assembled to form the joint assembly 402 are inserted in the receiving seat 40 of wing 401 and the hole axes W1, W2, W3, previously aligned with one another in the assembly position, are also aligned with the rivet insertion axis Y. In other words, in final assembly, the above-mentioned alignment direction is aligned with the rivet insertion axis Y.

The joint assembly 402 is thus connectable in an articulated manner to wing 401 by means of the insertion of said at least one rivet 45 in said holes, previously aligned along the alignment direction, along said rivet insertion axis Y.

Moreover, in particular, damper 41 comprises a pin seat 430 suitable for accommodating pin 42.

Moreover, in an embodiment, the connecting rod 43 comprises a second hole having a hole axis C1, and hinge 4 comprises a box 403 suitable for engaging the connecting rod 43 through a locking means, e.g., a U-bolt, inserted along the hole axis C1.

In a particularly advantageous embodiment, with reference to the example of hinge 4 and to Figure 7, wing 401 rests on a pallet 70 so that the rivet insertion axis Y is parallel to the imaginary transport plane and is orthogonal to the feeding direction X, and so that the receiving seat 40 faces the opposite side with respect to the ground surface.

In other words, in such an embodiment, wing 401 lies horizontally on pallet 70 and the receiving seat 40 faces upwards. Therefore, in such an embodiment, the receiving seat 40 is suitable for receiving a joint assembly 402 arriving from the top.

The present invention relates to an assembly station 9 for assembling multicomponent items 4 starting from a first sub-assembly 412, a second sub-assembly 434, and a receiving component 401.

With reference to Figures 9 to 14b, the assembly station 9 according to the invention comprises:
- a first manipulator arm 1 suitable for pick a first sub-assembly 412 from a respective picking zone;
- a second manipulator arm 2 suitable for pick said second sub-assembly 434 from a respective picking zone;
- a grabbing device 70 on which a receiving component 401 is housable, suitable for take a stationary status and having a receiving seat 40 suitable for receive a joint assembly 402 comprising said first sub-assembly 412 and said second sub-assembly 434;
- an electronic control unit operatively connected to said first and second manipulator arms 1, 2 and suitable for send a synchronous translation signal to said first and second manipulator arms 1, 2.

According to the invention, such first and second manipulator arms 1, 2 are suitable for assembling said sub-assemblies 412, 434 to form a joint assembly 402 and are suitable for being actuated in translation as a function of said synchronous translation signal for integrally translating with each other towards said pallet 70 to bring the joint assembly 402 to the receiving seat 40 of the receiving component 401.

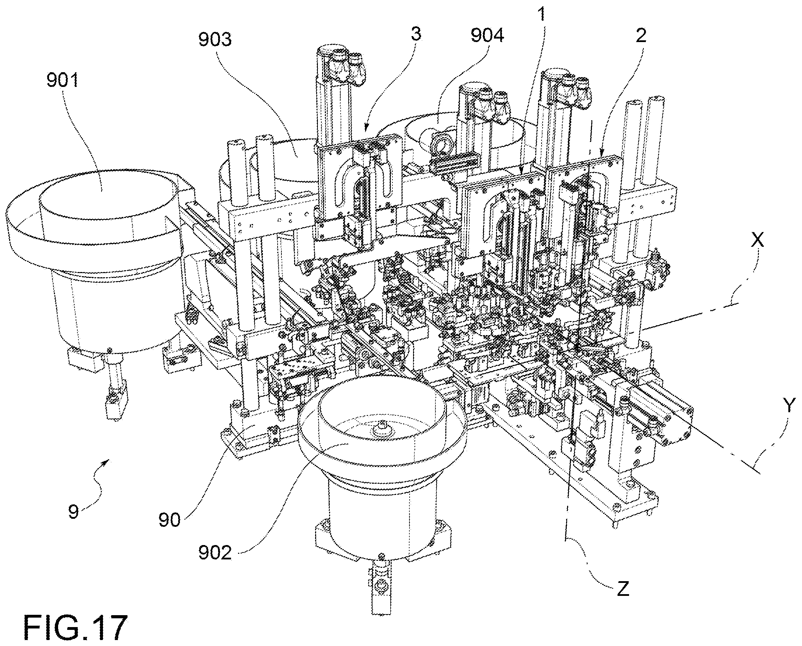

In an embodiment, with reference to Figures 17 and 18, the assembly station 9 comprises a first pre-assembly group 91 suitable for pre-assembling a first component 41 and a second component 42 to form the first sub-assembly 412.

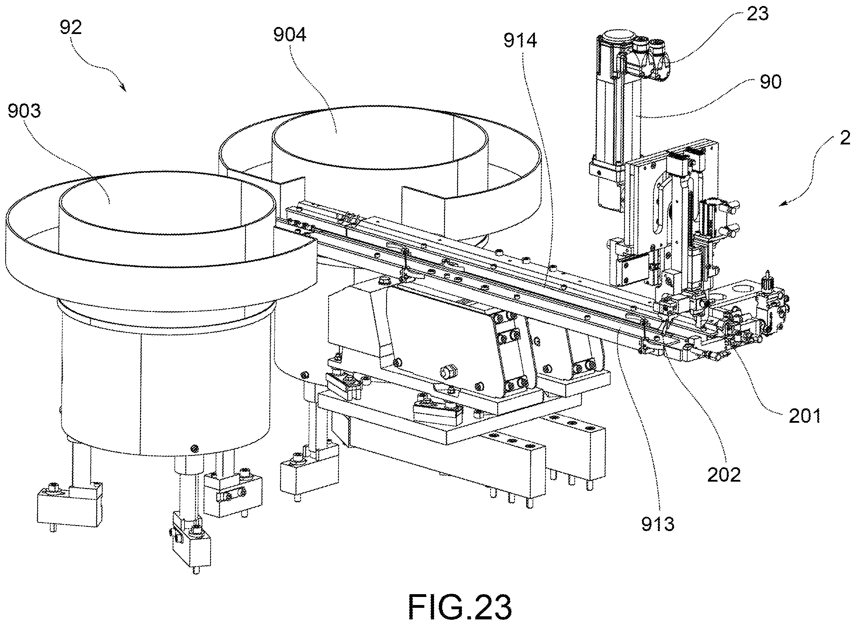

Moreover, in an embodiment, with reference to Figures 23 and 24, the assembly station 9 comprises a second pre-assembly group 92 suitable for pre-assemble a third component 43 and a fourth component 44 to form the second sub-assembly 434.

Moreover, in an embodiment, the assembly station 9 comprises a plurality of feeding devices 901, 902, 903, 904 for feeding the respective pre-assembly groups 91, 92 with the components 41, 42, 43, 44.

Preferably, such feeding devices 901, 902, 903, 904 are circular or linear electromagnetic vibration self-distributors.

Moreover, the assembly station 9 preferably comprises a support structure 90 which supports each pre-assembly group 91, 92 and each feeding device 901, 902, 903, 904.

Preferably, with reference to the example of hinge 4, the first pre-assembly group 91 is fed with a damper 41 and with a pin 42 by a damper feeding device 901 and a pin feeding device 902, respectively.

To this end, the first pre-assembly group 91 is suitable for manipulating damper 41 and pin 42, which are fed separately, so as to assemble pin 42 in damper 41.

In an advantageous embodiment, the feeding devices 901 and 902 are each followed by a transport guide 911, 912. Each transport guide 911, 912 is suitable for bringing the respective component 41, 42 to a respective picking zone.

In an advantageous embodiment, with reference to the example of hinge 4, the first pre-assembly group 91 comprises a third manipulator arm 3 suitable for applying pin 42 to damper 41.

In a preferred embodiment, one or more of said first 1, second 2 and third 3 manipulator arms are pick and place robots. For example, the structural and functional features of such one or more manipulator arms 1, 2, 3 are illustrated in documents WO2014/177985 and WO2014/177979 to the Applicant.

In a preferred embodiment, the third manipulator arm 3 is suitable for picking a first component 41, e.g., a damper 41, from the picking zone and bringing it to a second component insertion zone or pin insertion zone.

In a preferred embodiment, the first pre-assembly group 91 comprises a position sensor suitable for detecting the presence of the first component 41 in the picking zone and suitable for sending a presence signal to an electronic control unit for actuating the third manipulator arm 3.

In an embodiment, the third manipulator arm 3 comprises a first gripper 301, sustained by a gripper-holder group 30. In an embodiment, such a first gripper 301 is suitable for being actuated to open and close so as to grab damper 41 in the loading zone and transport it in such a pin insertion zone.

Further, the first pre-assembly group 91 comprises a pin insertion device which inserts pin 42 into the pin seat 430.

Preferably, the pin insertion device is an unpacking device.

In an embodiment, the pin insertion device comprises a centering device and an inserter. The centering device comprises a respective movable punch suitable for positioning the damper 41 so that the pin seat 430 is suitable for receiving the pin 42. Such a movable punch is moved by a pneumatic cylinder. The inserter comprises a respective movable punch suitable for pushing pin 42 into the pin seat 430.

In particular, when the movable inserter punch advances towards the pin seat 430, the movable centering device punch retracts progressively.

In a constructional variant, the pin insertion device advantageously comprises a linear transducer, e.g., a Sick transducer, suitable for measuring the exact position of the pneumatic cylinder moving the movable centering device punch.

Advantageously, such a linear transducer allows monitoring if the stroke of the pneumatic cylinder moving the centering device has actually been completed and ensuring that pin 42 is actually inserted in the pin seat 430.

According to an embodiment, as mentioned in the paragraphs above, the third manipulator arm 3 comprises a first gripper 301, a second gripper 302 and a third gripper 303. The operation of the three grippers is detailed below with reference to the example in which the first component is a damper 41 and the second component is a pin 42.

In particular, the first gripper 301 is suitable for transporting damper 41 from a picking zone to a pin insertion zone, where a pin insertion device is suitable for inserting pin 42 into the pin seat 430. Preferably, pin 42 is fed by means of the aforesaid dedicated feeding device 902.

The second gripper 302 is suitable for picking the first sub-assembly 412, comprising damper 41 and pin 42 which are joined by means of the operation described in the preceding paragraph, from the pin insertion zone and bringing it to a first greasing station 6.

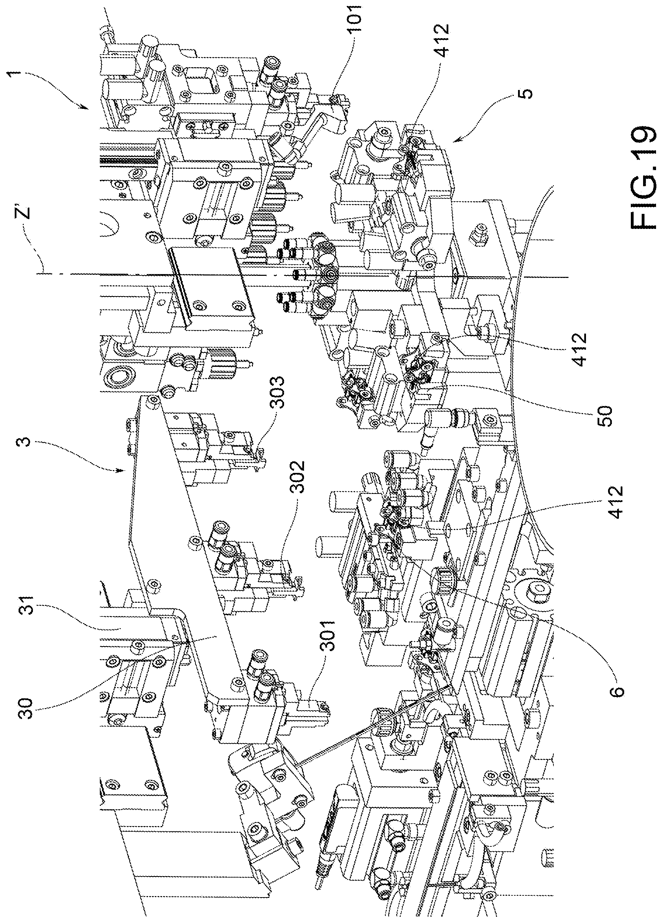

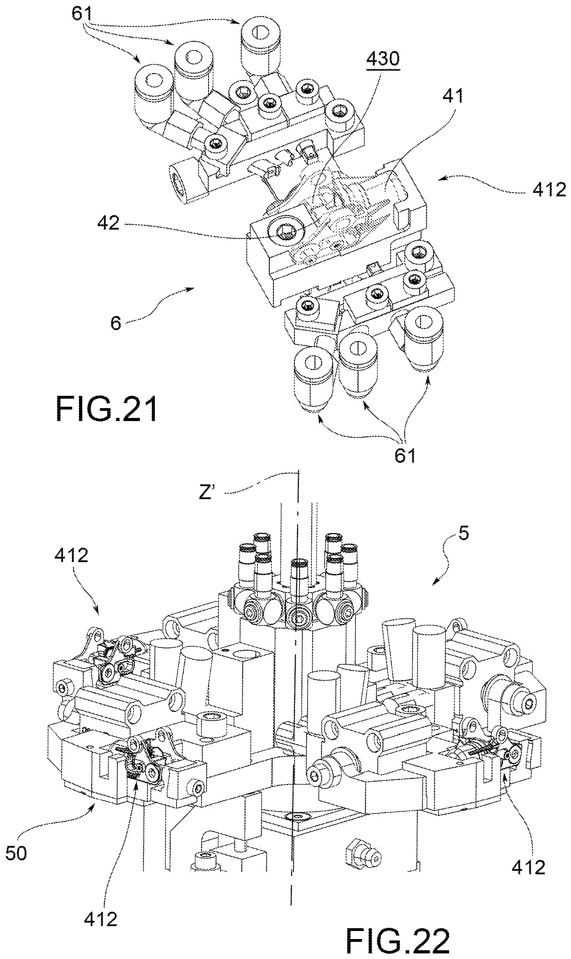

According to an embodiment, with reference to Figures 19 and 21, the assembly station 9 thus comprises a greasing station 6 which preferably comprises greasing means 61 suitable for distributing grease in the second pin 430.

Preferably, the greasing station 6 comprises a displacement pump suitable for dosing the grease. Moreover, in a constructional variant, such a displacement pump comprises a sensor suitable for detecting the presence of available grease, and an electronic control unit connected to such a sensor is suitable for actuating the pump only if such a sensor detects the availability of grease.

Lastly, the third gripper 303 is suitable for picking the first sub-assembly 412 from the greasing station 6 and bringing it to a standby station 50.

In an embodiment of the invention, with reference to Figures 19 and 22, the assembly station 9 comprises a rotary table 5 comprising a supporting plate having two or more subsequent resting positions. Preferably, the standby station 50 is one position of said subsequent resting positions.

In other words, according to such an embodiment, the third gripper 303 is suitable for positioning the first sub-assembly 412 in one position of said subsequent positions of said rotary table 5, preferably in the position corresponding to the standby station 50.

In an embodiment, the rotary table 5 has four subsequent positions.

In a constructional variant, each subsequent position is suitable for receiving and supporting the first sub-assembly 412.

According to an advantageous embodiment, the rotary table 5 is rotationally operable about a second vertical direction Z', parallel to the vertical direction Z and perpendicular to the ground surface.

In an advantageous embodiment, the rotary table 5 is suitable for being stopped during the rotation so that each subsequent position becomes, during the rotation, a standby station 50 for receiving the first sub-assembly 412.

According to an embodiment of the present invention, the first sub-assembly 412 is placed in the standby station 50 and the rotary table 5 performs two subsequent 90° rotations or one 180° rotation about the rotation axis Z, bringing the first sub-assembly 412 to a loading position.

In a variant, each subsequent position of the rotary table 5 comprises compression means suitable for compressing the damper 41.

Preferably, such compression means are pneumatic cylinders.

Advantageously, the positioning of the first sub-assembly 412 on the rotary table 5 allows a zone to be obtained which acts as a standby zone for providing said first sub-assembly 412 for picking by the first manipulator arm 1, for assembling it together with a second sub-assembly 434.

Moreover, leaving the first sub-assembly 412 on the rotary table 5 advantageously allows damper 41 to be gradually compressed to be picked by the first manipulator arm 1.

Advantageously, the use of such a rotary table 5 allows the damper to be compressed gradually, avoiding possible breaking which could occur if the damper were compressed in an instantaneous manner.

Simultaneously, the stabilization of the grease deposited in the greasing station inside the pin seat 430 is advantageously promoted.

It is apparent that the three grippers 301, 302, 303 are suitable for operating in series on the same first sub-assembly 412 and on the components thereof, i.e., on said first and second components 41, 42 (according to the example of hinge 4, on damper 41 and on pin 42), i.e., each gripper sequentially operates on the same sub-assembly.

It is just as apparent that while the first gripper 301 is operating on a first sub-assembly, the second gripper 302 is operating on a first preceding sub-assembly, i.e., on a first sub-assembly preceding it in the assembly line and which already underwent the insertion of pin 42 in the pin seat 430, and the third gripper 303 on a further preceding first sub-assembly, which already underwent the insertion of pin 42 in the pin seat 430 and the greasing of such a seat in the greasing station 6.

Accordingly, the three grippers 301, 302, 303 are advantageously suitable for operating simultaneously on three separate sub-assemblies, thus increasing the productivity of the assembly station.

In an embodiment of the present invention, with reference to the example of hinge 4, the second sub-assembly comprises a connecting rod 43 and a spring 44 and the second pre-assembly group 92 is suitable for pre-assembling said connecting rod 43 and said spring 44 to form the second sub-assembly 434.

Preferably, the second pre-assembly group 92 is fed with each connecting rod 43 and with each spring 44 by a connecting rod feeding device 903 and a spring feeding device 904, respectively.

To this end, the second pre-assembly group 92 is suitable for handling the connecting rod 43 and spring 44 so as to assemble spring 44 in the connecting rod 43 to form the second sub-assembly 434.

In an embodiment, the feeding devices 903 and 904 are followed by a respective transport guide 913, 914, each transport guide 913, 914 being suitable for bringing the respective component 43, 44 to a respective picking zone.

In a variant, the second pre-assembly group 92 further comprises a respective greasing station for distributing grease in spring 44, preferably placed in the picking zone of the spring itself.

In an advantageous embodiment, the second manipulator arm 2 is suitable both for applying spring 44 to the connecting rod 43 and for picking the second pre-assembled sub-assembly 434 and assembling it together with the first sub-assembly 412.

In a preferred embodiment, in particular, the second manipulator arm 2 is suitable for picking a spring 44 from the picking zone and placing it in the connecting rod 43.

In a constructional variant, the second manipulator arm 2 comprises a first gripper 201 suitable for being actuated to open and close so as to grab the spring 44 in the picking zone and transport it and position it in the connecting rod 43.

Moreover, in a preferred embodiment, the second manipulator arm 2 comprises two grippers, i.e., the first gripper 201 described above, and a second gripper 202, which are sustained by the gripper-holder group 20.

In an embodiment, the first gripper 201 and the second gripper 202 are not integral with each other during motion.

As illustrated above, the first gripper 201 is suitable for picking spring 44 and positioning it in the connecting rod 43.

As already mentioned for the general embodiment with respect to a third component 43 and a fourth component 44, the second gripper 202 is suitable for picking the second sub-assembly 434 and assembling it together with the first sub-assembly 412.

Preferably, the two grippers 201 and 202 are suitable for acting simultaneously on two consecutive sub-assemblies 434. It is apparent that each gripper 201, 202 operates on the same second sub-assembly 434 and/or on the components 43, 44 thereof, i.e., in such an embodiment, on the connecting rod 43 and on spring 44, in series.

Moreover, in an advantageous embodiment, the first manipulator arm 1 is suitable for picking the first sub-assembly 412 from the rotary table 5.

In a constructional variant, the first manipulator arm 1 comprises a gripper 101 suitable for opening and closing to grab the first sub-assembly 412 to bring it to the mutual assembly position and assemble it together with a second sub-assembly 434.

In a preferred embodiment, each manipulator arm 1, 2, 3 comprises a guiding wall 12, 22, 32 in which a guiding groove 120, 220, 320 is obtained. Each guiding groove is suitable for guiding the movement of a respective gripper according to the functionalities described in the aforesaid documents.

Moreover, each manipulator arm 1, 2, 3 preferably comprises at least one gripper 101, 201, 301.

In an embodiment, the assembly station 9 comprises a respective actuation group 13, 23, 33 for each manipulator arm 1, 2, 3, suitable for actuating the movement of each manipulator arm 1, 2, 3.

In an advantageous embodiment, the first manipulator arm 1 and the second manipulator arm 2 are suitable for picking the first sub-assembly 412 and the second sub-assembly 434, respectively, and keeping them suspended, avoiding all contact with any support other than said first 1 and second 2 manipulator arms.

In an advantageous variant, the first manipulator arm 1 and the second manipulator arm 2 are suitable for assembling the first sub-assembly 412 and the second sub-assembly 434 to each other to obtain a joint assembly 402.

In an advantageous embodiment, said first and second manipulator arms 1, 2 are suitable for assembling such sub-assemblies 412, 434 in a suspended-in-air position, i.e., "flying", that is, avoiding all contact with any support other than said first and second manipulator arms 1, 2, to form a joint assembly 402.

In an embodiment, considering the receiving component 401 (according to the example of the hinge, wing 401) placed on the pallet 70, the assembly of the sub-assemblies described above occurs at a given distance along the vertical direction Z from said receiving component 401.

That is, the receiving seat 40 is suitable for accommodating the sub-assemblies only once they have been assembled in the air, at a given distance from said seat 40. Or, in other words, the assembly station 9 is suitable for bringing the joint assembly 402 to the receiving seat 40 only once such a joint assembly 402 has already been assembled.

Moreover, according to an advantageous embodiment, following the assembly of the joint assembly 402, the first manipulator arm 1 and the second manipulator arm 2 are suitable for translating towards the receiving component 401, dragging with them the joint assembly 402 previously assembled in the air, to position it in the receiving seat 40.

Preferably, said first and second manipulator arms 1, 2 are suitable for translating towards the receiving seat 40 along the vertical direction Z.

In a preferred embodiment, the first manipulator arm 1 comprises a first arm constraining portion, and in which the second manipulator arm 2 comprises a second arm constraining portion, said first and second arm constraining portions being mutually engageable for constraining said first manipulator arm 1 and said second manipulator arm 2 to each other.

In an advantageous embodiment, the assembly station comprises a respective actuation group 13, 23 for each manipulator arm 1, 2. The electronic control unit is suitable for actuating only one of said actuation units 13, 23 to generate the integral translation of both said first and second manipulator arms 1, 2 towards the receiving seat 40.

That is, in such an advantageous embodiment, only one of the manipulator arms 1, 2 is actuated with power in translation towards the receiving seat 40. The inactive manipulator arm undergoes the translation due to the dragging by the active manipulator arm by virtue of the temporary constraint obtained by means of the respective constraining portions of each manipulator arm.

In an embodiment, such constraining portions are obtained in the respective grippers 101, 202 of said first and second manipulator arms 1, 2.

In an embodiment, the respective constraining portions of said first and second manipulator arms 1, 2 are suitable for switching from an engaged configuration to a disengaged configuration, and vice versa, according to the operating needs of the assembly station.

In a preferred embodiment, the first manipulator arm 1 and the second manipulator arm 2 are suitable for moving in translation integrally along a vertical direction Z perpendicular to the work surface 700, to translate the joint assembly 402 vertically towards the receiving seat 40 of the receiving component 401.

It is apparent that, as described at the beginning of the present disclosure, in the example of hinge 4, said first and second manipulator arms 1, 2 are suitable for positioning the joint assembly 402 in the receiving seat 40 so that the respective hole axes W1, W2, W3 of damper 41, of the connecting rod 43 and of spring 44, are aligned with the rivet insertion axis Y of the hole of wing 401.

Moreover, in an embodiment of the present invention, the assembly station 9 comprises a riveting apparatus 8 comprising a riveting machine 81.

In a preferred variant, the riveting apparatus 8 is placed close to pallet 70, and in particular, the riveting machine 81 is arranged, with respect to wing 401, in stationary status, in an aligned manner with respect to the rivet insertion axis Y.

Preferably, the riveting apparatus 8 has the same structural and functional features illustrated in documents WO2018/029563 and WO2020/121102A1 to the Applicant.

The riveting machine 81 is suitable for inserting a rivet 45 in wing 401 and in the joint assembly 402 along the rivet insertion axis Y so as to connect the joint assembly 402 and wing 401 in an articulated manner.

In an embodiment of the invention, the assembly station 9 comprises detection means suitable for detecting a station status and transmit a working signal or a stationary signal to the electronic control unit to stop or actuate, respectively, the assembly station 9.

In particular, such detection means comprise a first sensor suitable for detecting the presence of a provision of components along each transport guide 911, 912, 913, 914.

Moreover, preferably such detection means comprise a second sensor suitable for detecting if the provision of components along each transport guide 911, 912, 913, 914 is sufficient to push the respective component to the correct position in the loading zone to be picked by the respective manipulator arm.

Moreover, in an embodiment, the detection means comprise a third sensor, preferably placed at an end of one or more of the transport guides 911, 912, 913, 914, said sensor being suitable for detecting the presence, in the respective picking zone c, of the component which is to be picked by the respective manipulator arm.

In the most complete embodiment, the method for assembling multicomponent items according to the embodiment in which the multicomponent item 4 is a hinge, consists of the following steps:
I) providing an assembly station 9 according to the present invention;
II) feeding a first pre-assembly group 91 with a damper 41 and a pin 42, and feeding a second pre-assembly group 92 with a connecting rod 43 and a spring 44;
III) assembling, in the first pre-assembly group 91, damper 41 and pin 42 to each other to form a first sub-assembly 412;
IV) assembling, in the second pre-assembly group 92, the connecting rod 43 and spring 44 to each other to form a second sub-assembly 434;
V) bringing, by means of a first manipulator arm 1 and a second manipulator arm 2, the first sub-assembly 412 and the second sub-assembly 434, respectively, to a suspended-in-air position;
VI) assembling, in said suspended-in-air position, the first sub-assembly 412 with the second sub-assembly 434 to form a joint assembly 402;
VII) providing a pallet 70 on which a wing 401 is positioned in stationary status and comprising a receiving seat 40 suitable for accommodating the joint assembly 402;
VIII) actuating the first manipulator arm 1 and the second manipulator arm 2 integrally in translation towards the receiving seat 40 and positioning the joint assembly 402 in the receiving seat 40 so as to form one or more rivet insertion seats suitable for engaging one or more rivets 45;
IX) providing a riveting apparatus 8 close to pallet 70, said riveting apparatus 8 comprising a riveting machine 81, and feeding said riveting apparatus 8 with one or more rivets 45;
X) connecting, by means of the riveting machine 81, the joint assembly 402 and wing 401 in an articulated manner by means of the insertion of said one or more rivets 45 in said one or more rivet insertion seats in the joint assembly 402 and in wing 401.

Preferably, steps I) to X) of the method occur all in a same assembly station 9 and while wing 401 is in a single stationary status.

In an embodiment, when the assembly station 9 is inserted in an assembly line, pallet 70 is actuated in translation along the feeding direction X only once wing 401 has been connected in an articulated manner with the joint assembly 402 by means of the insertion of one or more rivets 45.

The present invention also relates to an assembly line comprising an assembly station 9 according to the present invention.

Innovatively, the present invention solves the conventional drawbacks of the background art.

Advantageously, the assembly station according to the present invention allows the assembly operations of a multicomponent item to be accelerated.

Moreover, advantageously the assembly station, the assembly method and the assembly line according to the present invention simplify the assembly operations of a multicomponent item and ensure an increase in the production volumes of the assembly line in which they are inserted with respect to known assembly lines, time being equal.

According to a further advantage, the assembly station according to the present invention increases the flexibility of the assembly line in which it is inserted. Indeed, advantageously, providing an assembly station suitable for allowing assembling a plurality of accessory components in a single station allows adapting the assembly line to constructional variants of the final multicomponent item, intervening only on the sub-steps of the assembly, without acting on the development of the main line.

It is apparent that in order to meet specific needs, those skilled in the art could make variations to the embodiments of the aforesaid assembly station or replace elements with others which are functionally equivalent.

Such variations are also contained within the scope of protection as defined by the following claims. Moreover, each variation described as belonging to a possible embodiment can be implemented irrespective of the other variations described.

## Claims

1. A method for assembling multicomponent items (4), comprising a plurality of components (41, 42, 43, 44, 401), comprising the following steps:
a) providing a first sub-assembly (412) comprising at least a first (41) and a second (42) component and a second sub-assembly (434) comprising at least a third component (43);
b) picking, by means of a first manipulator arm (1) and a second manipulator arm (2), the first sub-assembly (412) and the second sub-assembly (434), respectively, and bringing them to a mutual assembly position, wherein said first sub-assembly (412) is in an assembly position with said second sub-assembly (434);
c) assembling, by means of said first (1) and second manipulator arm (2), the first sub-assembly (412) with the second sub-assembly (434) to form a joint assembly (402);
d) sending, on an electronic control unit, a synchronous translation signal to the first (1) and second manipulator arm (2);
e) actuating, as a function of said synchronous translation signal, the synchronous translation of said first (1) and second manipulator arm (2), and bringing said joint assembly (402) to a respective receiving seat (40) obtained in a receiving component (401), said receiving seat (40) being suitable for receiving said joint assembly (402).

2. Assembly method according to claim 1, wherein the second sub-assembly (434) comprises at least two components (43, 44), and wherein the method comprises, prior to step a), the following steps:
a0) providing a first pre-assembly group (91);
a01) providing a second pre-assembly group (92);
a1) assembling at least a first component (41) and a second component (42) to each other in the first pre-assembly group (91) to form the first sub-assembly (412);
a11) assembling at least a third component (43) and a fourth component (44) to each other in the second pre-assembly group (92) to form the second sub-assembly (434).

3. Assembly method according to claim 2, wherein steps a1) and a11) terminate simultaneously.

4. Assembly method according to any one of the preceding claims, wherein step b) and step c) are performed while keeping the first sub-assembly (412) and the second sub-assembly (434) in suspended-in-air position, that is avoiding contact with any support other than said first and second manipulator arms (1, 2).

5. Assembly method according to any one of the preceding claims, wherein the first and second manipulator arms (1, 2) are suitable for being temporarily constrained to each other and for integrally performing a translation towards the receiving seat (40), and wherein step e) is performed by means of the following sub-steps:
e0) constraining the first (1) and second manipulator arm (2) to each other so as to make them integral in translation;
e1) actuating in translation at least one of said first and second manipulator arms (1, 2) to drag the other of said first and second manipulator arms (1, 2) and the joint assembly (402) in translation towards the receiving component (401).

6. Assembly method according to any one of the preceding claims, wherein the receiving component (401) is positioned, at least during the performance of steps a) to e), on a grabbing device (70) placed on a work surface (700) so that the receiving seat (40) faces upwards, on the opposite side with respect to the work surface (700).

7. Assembly method according to claim 6, wherein all the steps listed in at least one of the preceding claims occur while the receiving component (401) is in the same stationary status, i.e. it is in the same assembly status and/or in the same position.

8. Assembly method according to claim 6 or 7, wherein the translation of the manipulator arms (1, 2) towards the receiving seat (40) occurs at least along a vertical direction (Z), perpendicular to said work surface (700),
and wherein step e) consists of the synchronous descent of each manipulator arm (1, 2) along said vertical direction (Z) towards said grabbing device (70) and in the placement from the top of the joint assembly (402) in the receiving seat (40).

9. Assembly method according to any one of claims 5 to 8, wherein the first manipulator arm (1) comprises at least a first arm constraining portion and the second manipulator arm (2) comprises at least a second arm constraining portion, said first and second arm constraining portions being suitable for being mutually engaged to constrain said first and second manipulator arms (1, 2) to each other, and wherein step e0) provides geometrically constraining the first (1) and second manipulator arm (2) by means of the mutual engagement between said first and second arm constraining portions.

10. Assembly method according to any one of the preceding claims, wherein, when assembled, the joint assembly (402) and the receiving component (401) form one or more rivet insertion seats suitable for receiving one or more rivets (45) for connecting the joint assembly (402) in articulated manner to the receiving component (401), and wherein the assembly method comprises, after step e), the following operating steps:
h) providing a riveting apparatus (8) comprising a riveting machine (81), and feeding said riveting apparatus (8) with one or more rivets (45);
i) connecting, by means of said riveting machine (81), the joint assembly (402) in articulated manner in the receiving component (401) by means of the insertion of said one or more rivets (45) in said one or more rivet insertion seats.

11. An assembly station (9) for assembling multicomponent items (4) starting from a first sub-assembly (412), a second sub-assembly (434), and a receiving component (401), said assembly station (9) comprising:
- a first manipulator arm (1) suitable for picking said first sub-assembly (412) from a respective picking zone;
- a second manipulator arm (2) suitable for picking said second sub-assembly (434) from a respective picking zone;
- a grabbing device (70) suitable for accommodating a receiving component (401) having a receiving seat (40) suitable for receiving a joint assembly (402) comprising said first sub-assembly (412) and said second sub-assembly (434); **characterised by** further comprising:
- an electronic control unit operatively connected with said first and second manipulator arms (1, 2), said electronic control unit being suitable for sending a synchronous translation signal to said first and second manipulator arms (1, 2);
said first and second manipulator arms (1, 2) being suitable for assembling said sub-assemblies (412, 434) for forming a joint assembly (402) and being suitable for being actuated in translation as a function of said synchronous translation signal, and for integrally translating towards said grabbing device (70) for bringing said joint assembly (402) to the receiving seat (40) of said receiving component (401).

12. Assembly station according to the preceding claim, comprising a first pre-assembly group (91) suitable for pre-assembling a first component (41) and a second component (42) for making the first sub-assembly (412), and comprising a second pre-assembly unit (92) suitable for pre-assembling a third component (43) and a fourth component (44) for making the second sub-assembly (434).

13. Assembly station (9) according to claim 11 or 12, wherein the first manipulator arm (1) comprises a first arm constraining portion, and wherein the second manipulator arm (2) comprises a second arm constraining portion, said first and second arm constraining portions being mutually engageable for constraining said first manipulator arm (1) and said second manipulator arm (2) to each other.

14. Assembly station (9) according to any one of claims 11 to 13, wherein the first (1) and second manipulator arm (2) are suitable for mutually integrally translating along a vertical direction (Z) perpendicular to a work surface (700) on which the grabbing device (70) is positioned.

15. Assembly station (9) according to any one of claims 11 to 14, wherein the first manipulator arm (1) and the second manipulator arm (2) each comprise a respective actuation group (13, 23) suitable for actuating in translation the respective manipulator arm (1, 2) and wherein the electronic control unit is suitable for activating only one of said actuation groups (13, 23) for generating the integral translation of both said first and second manipulator arms (1, 2) towards the receiving seat (40).

16. An assembly line comprising an assembly station according to any one of claims 11 to 15.

## Patentansprüche

1. Verfahren zum Bestücken von Mehrkomponentenartikeln (4), die eine Vielzahl von Komponenten (41, 42, 43, 44, 401) umfassen, umfassend die folgenden Schritte:
a) Bereitstellen einer ersten Unterbaugruppe (412), die mindestens eine erste (41) und eine zweite (42) Komponente umfasst, und einer zweiten Unterbaugruppe (434), die mindestens eine dritte Komponente (43) umfasst;
b) Greifen der ersten Unterbaugruppe (412) bzw. der zweiten Unterbaugruppe (434) mittels eines ersten Manipulatorarms (1) und eines zweiten Manipulatorarms (2) und Bringen derselben in eine gegenseitige Bestückungsposition, wobei sich die erste Unterbaugruppe (412) in einer Bestückungsposition mit der zweiten Unterbaugruppe (434) befindet;
c) Bestücken der ersten Unterbaugruppe (412) mit der zweiten Unterbaugruppe (434) mittels des ersten (1) und des zweiten Manipulatorarms (2), um eine Verbundbaugruppe (402) zu bilden;
d) Senden eines synchronen Verschiebungssignals an den ersten (1) und den zweiten Manipulatorarm (2) auf einer elektronischen Steuereinheit;
e) Betätigen der synchronen Verschiebung des ersten (1) und des zweiten Manipulatorarms (2) in Abhängigkeit von dem synchronen Verschiebungssignal, und Bringen der Verbundbaugruppe (402) zu einem jeweiligen Aufnahmesitz (40), der in einer Aufnahmekomponente (401) ausgebildet ist, wobei der Aufnahmesitz (40) zur Aufnahme der Verbundbaugruppe (402) geeignet ist.

2. Bestückungsverfahren nach Anspruch 1, wobei die zweite Unterbaugruppe (434) mindestens zwei Komponenten (43, 44) umfasst, und wobei das Verfahren vor Schritt a) die folgenden Schritte umfasst:
a0) Bereitstellen einer ersten Vorbestückungsgruppe (91);
a01) Bereitstellen einer zweiten Vorbestückungsgruppe (92);
a1) Bestücken mindestens einer ersten Komponente (41) und einer zweiten Komponente (42) miteinander in der ersten Vorbestückungsgruppe (91), um die erste Unterbaugruppe (412) zu bilden;
a11) Bestücken mindestens einer dritten Komponente (43) und einer vierten Komponente (44) miteinander in der zweiten Vorbestückungsgruppe (92), um die zweite Unterbaugruppe (434) zu bilden.

3. Bestückungsverfahren nach Anspruch 2, wobei die Schritte a1) und a11) gleichzeitig enden.

4. Bestückungsverfahren nach einem der vorhergehenden Ansprüche, wobei Schritt b) und Schritt c) durchgeführt werden, während die erste Unterbaugruppe (412) und die zweite Unterbaugruppe (434) in einer in der Luft schwebenden Position gehalten werden, das heißt unter Vermeidung von Kontakt mit einer anderen Stütze als dem ersten und dem zweiten Manipulatorarm (1, 2).

5. Bestückungsverfahren nach einem der vorhergehenden Ansprüche, wobei der erste und der zweite Manipulatorarm (1, 2) dazu geeignet sind, vorübergehend aneinander gekoppelt zu werden und integral eine Verschiebung in Richtung des Aufnahmesitzes (40) auszuführen, und wobei Schritt e) mittels der folgenden Unterschritte durchgeführt wird:
e0) Koppeln des ersten (1) und des zweiten Manipulatorarms (2) aneinander, um sie in der Verschiebung integral zu machen;
e1) verschiebendes Betätigen mindestens eines des ersten und des zweiten Manipulatorarms (1, 2), um den anderen des ersten und des zweiten Manipulatorarms (1, 2) und die Verbundbaugruppe (402) verschiebend in Richtung der Aufnahmekomponente (401) mitzuziehen.

6. Bestückungsverfahren nach einem der vorhergehenden Ansprüche, wobei die Aufnahmekomponente (401) zumindest während der Durchführung der Schritte a) bis e) auf einer Greifvorrichtung (70), die auf einer Arbeitsfläche (700) platziert ist, so dass der Aufnahmesitz (40) nach oben weist, auf der gegenüberliegenden Seite in Bezug auf die Arbeitsfläche (700) positioniert ist.

7. Bestückungsverfahren nach Anspruch 6, wobei alle in mindestens einem der vorhergehenden Ansprüche aufgeführten Schritte erfolgen, während sich die Aufnahmekomponente (401) im selben stationären Zustand befindet, d. h., sie befindet sich im selben Bestückungszustand und/oder in derselben Position.

8. Bestückungsverfahren nach Anspruch 6 oder 7, wobei die Verschiebung der Manipulatorarme (1, 2) in Richtung des Aufnahmesitzes (40) zumindest entlang einer vertikalen Richtung (Z) erfolgt, die senkrecht zur Arbeitsfläche (700) verläuft,
und wobei Schritt e) aus dem synchronen Absenken jedes Manipulatorarms (1, 2) entlang der vertikalen Richtung (Z) in Richtung der Greifvorrichtung (70) und im Platzieren der Verbundbaugruppe (402) von oben in den Aufnahmesitz (40) besteht.

9. Bestückungsverfahren nach einem der Ansprüche 5 bis 8, wobei der erste Manipulatorarm (1) mindestens einen ersten Armkopplungsabschnitt umfasst und der zweite Manipulatorarm (2) mindestens einen zweiten Armkopplungsabschnitt umfasst, wobei der erste und der zweite Armkopplungsabschnitt dazu geeignet sind, gegenseitig in Eingriff gebracht zu werden, um den ersten und den zweiten Manipulatorarm (1, 2) aneinander zu koppeln, und wobei Schritt e0) ein geometrisches Koppeln des ersten (1) und des zweiten Manipulatorarms (2) mittels des gegenseitigen Eingriffs zwischen dem ersten und dem zweiten Armkopplungsabschnitt vorsieht.

10. Bestückungsverfahren nach einem der vorhergehenden Ansprüche, wobei die Verbundbaugruppe (402) und die Aufnahmekomponente (401) im bestückten Zustand einen oder mehrere Nieteinsetzsitze bilden, die zur Aufnahme eines oder mehrerer Niete (45) geeignet sind, um die Verbundbaugruppe (402) gelenkig mit der Aufnahmekomponente (401) zu verbinden, und wobei das Bestückungsverfahren nach Schritt e) die folgenden Arbeitsschritte umfasst:
h) Bereitstellen einer Nietvorrichtung (8), die eine Nietmaschine (81) umfasst, und Zuführen eines oder mehrerer Niete (45) zu der Nietvorrichtung (8);
i) gelenkiges Verbinden der Verbundbaugruppe (402) in der Aufnahmekomponente (401) mittels der Nietmaschine (81) durch Einsetzen des einen oder der mehreren Niete (45) in den einen oder die mehreren Nieteinsetzsitze.

11. Bestückstation (9) zum Bestücken von Mehrkomponentenartikeln (4) ausgehend von einer ersten Unterbaugruppe (412), einer zweiten Unterbaugruppe (434) und einer Aufnahmekomponente (401), wobei die Bestückstation (9) umfasst:
- einen ersten Manipulatorarm (1), der zum Greifen der ersten Unterbaugruppe (412) aus einer jeweiligen Greifzone geeignet ist;
- einen zweiten Manipulatorarm (2), der zum Greifen der zweiten Unterbaugruppe (434) aus einer jeweiligen Greifzone geeignet ist;
- eine Greifvorrichtung (70), die zur Aufnahme einer Aufnahmekomponente (401) geeignet ist, die einen Aufnahmesitz (40) aufweist, der zur Aufnahme einer Verbundbaugruppe (402) geeignet ist, welche die erste Unterbaugruppe (412) und die zweite Unterbaugruppe (434) umfasst; **dadurch gekennzeichnet, dass** sie ferner umfasst:
- eine elektronische Steuereinheit, die operativ mit dem ersten und dem zweiten Manipulatorarm (1, 2) verbunden ist, wobei die elektronische Steuereinheit dazu geeignet ist, ein synchrones Verschiebungssignal an den ersten und den zweiten Manipulatorarm (1, 2) zu senden;
wobei der erste und der zweite Manipulatorarm (1, 2) zum Bestücken der Unterbaugruppen (412, 434) zur Bildung einer Verbundbaugruppe (402) geeignet sind und dazu geeignet sind, in Abhängigkeit von dem synchronen Verschiebungssignal verschiebend betätigt zu werden und integral in Richtung der Greifvorrichtung (70) verschoben zu werden, um die Verbundbaugruppe (402) zum Aufnahmesitz (40) der Aufnahmekomponente (401) zu bringen.

12. Bestückstation nach dem vorhergehenden Anspruch, umfassend eine erste Vorbestückungsgruppe (91), die zum Vorbestücken einer ersten Komponente (41) und einer zweiten Komponente (42) zum Herstellen der ersten Unterbaugruppe (412) geeignet ist, und umfassend eine zweite Vorbestückungseinheit (92), die zum Vorbestücken einer dritten Komponente (43) und einer vierten Komponente (44) zum Herstellen der zweiten Unterbaugruppe (434) geeignet ist.

13. Bestückstation (9) nach Anspruch 11 oder 12, wobei der erste Manipulatorarm (1) einen ersten Armkopplungsabschnitt umfasst, und wobei der zweite Manipulatorarm (2) einen zweiten Armkopplungsabschnitt umfasst, wobei der erste und der zweite Armkopplungsabschnitt gegenseitig in Eingriff bringbar sind, um den ersten Manipulatorarm (1) und den zweiten Manipulatorarm (2) aneinander zu koppeln.

14. Bestückstation (9) nach einem der Ansprüche 11 bis 13, wobei der erste (1) und der zweite Manipulatorarm (2) dazu geeignet sind, gegenseitig integral entlang einer vertikalen Richtung (Z) senkrecht zu einer Arbeitsfläche (700), auf der die Greifvorrichtung (70) positioniert ist, verschoben zu werden.

15. Bestückstation (9) nach einem der Ansprüche 11 bis 14, wobei der erste Manipulatorarm (1) und der zweite Manipulatorarm (2) jeweils eine jeweilige Betätigungsgruppe (13, 23) umfassen, die zum verschiebenden Betätigen des jeweiligen Manipulatorarms (1, 2) geeignet ist, und wobei die elektronische Steuereinheit dazu geeignet ist, nur eine der Betätigungsgruppen (13, 23) zu aktivieren, um die integrale Verschiebung sowohl des ersten als auch des zweiten Manipulatorarms (1, 2) in Richtung des Aufnahmesitzes (40) zu erzeugen.

16. Bestückstraße, umfassend eine Bestückstation nach einem der Ansprüche 11 bis 15.

## Revendications

1. Procédé d'assemblage d'articles à composants multiples (4), comprenant une pluralité de composants (41, 42, 43, 44, 401), comprenant les étapes suivantes :
a) prévoir un premier sous-ensemble (412) comprenant au moins un premier (41) et un deuxième (42) composant et un deuxième sous-ensemble (434) comprenant au moins un troisième composant (43) ;
b) saisir, au moyen d'un premier bras manipulateur (1) et d'un deuxième bras manipulateur (2), le premier sous-ensemble (412) et le deuxième sous-ensemble (434), respectivement, et les amener dans une position d'assemblage mutuel, dans lequel ledit premier sous-ensemble (412) est dans une position d'assemblage avec ledit deuxième sous-ensemble (434) ;
c) assembler, au moyen desdits premier (1) et deuxième bras manipulateurs (2), le premier sous-ensemble (412) avec le deuxième sous-ensemble (434) pour former un ensemble de jonction (402) ;
d) envoyer, sur une unité de commande électronique, un signal de translation synchrone aux premier (1) et deuxième bras manipulateurs (2) ;
e) actionner, en fonction dudit signal de translation synchrone, la translation synchrone desdits premier (1) et deuxième bras manipulateurs (2), et amener ledit ensemble de jonction (402) vers un siège de réception respectif (40) formé dans un composant de réception (401), ledit siège de réception (40) étant approprié pour recevoir ledit ensemble de jonction (402).

2. Procédé d'assemblage selon la revendication 1, dans lequel le deuxième sous-ensemble (434) comprend au moins deux composants (43, 44), et dans lequel le procédé comprend, avant l'étape a), les étapes suivantes :
a0) prévoir un premier groupe de pré-assemblage (91) ;
a01) prévoir un deuxième groupe de pré-assemblage (92) ;
a1) assembler au moins un premier composant (41) et un deuxième composant (42) l'un à l'autre dans le premier groupe de préassemblage (91) pour former le premier sous-ensemble (412) ;
a11) assembler au moins un troisième composant (43) et un quatrième composant (44) l'un à l'autre dans le deuxième groupe de préassemblage (92) pour former le deuxième sous-ensemble (434).

3. Procédé d'assemblage selon la revendication 2, dans lequel les étapes a1) et a11) se terminent simultanément.

4. Procédé d'assemblage selon l'une quelconque des revendications précédentes, dans lequel l'étape b) et l'étape c) sont effectuées tout en maintenant le premier sous-ensemble (412) et le deuxième sous-ensemble (434) en position suspendue dans l'air, c'est-à-dire en évitant le contact avec tout support autre que lesdits premier et deuxième bras manipulateurs (1, 2).

5. Procédé d'assemblage selon l'une quelconque des revendications précédentes, dans lequel les premier et deuxième bras manipulateurs (1, 2) sont appropriés pour être temporairement solidarisés l'un à l'autre et pour effectuer solidairement une translation vers le siège de réception (40), et dans lequel l'étape e) est effectuée au moyen des sous-étapes suivantes :
e0) solidariser les premier (1) et deuxième bras manipulateurs (2) l'un à l'autre de manière à les rendre solidaires en translation ;
e1) actionner en translation au moins l'un desdits premier et deuxième bras manipulateurs (1, 2) pour entrainer l'autre desdits premier et deuxième bras manipulateurs (1, 2) et l'ensemble de jonction (402) en translation vers le composant de réception (401).

6. Procédé d'assemblage selon l'une quelconque des revendications précédentes, dans lequel le composant de réception (401) est positionné, au moins pendant la réalisation des étapes a) à e), sur un dispositif de préhension (70) placé sur une surface de travail (700) de sorte que le siège de réception (40) soit tourné vers le haut, du côté opposé par rapport à la surface de travail (700).

7. Procédé d'assemblage selon la revendication 6, dans lequel toutes les étapes énumérées dans au moins l'une des revendications précédentes se produisent alors que le composant de réception (401) est dans le même état stationnaire, c'est-à-dire qu'il est dans le même état d'assemblage et/ou dans la même position.

8. Procédé d'assemblage selon la revendication 6 ou 7, dans lequel la translation des bras manipulateurs (1, 2) vers le siège de réception (40) a lieu au moins le long d'une direction verticale (Z), perpendiculaire à ladite surface de travail (700),
et dans lequel l'étape e) consiste en la descente synchrone de chaque bras manipulateur (1, 2) le long de ladite direction verticale (Z) vers ledit dispositif de préhension (70) et en la mise en place à partir du haut de l'ensemble de jonction (402) dans le siège de réception (40).

9. Procédé d'assemblage selon l'une quelconque des revendications 5 à 8, dans lequel le premier bras manipulateur (1) comprend au moins une première partie de solidarisation de bras et le deuxième bras manipulateur (2) comprend au moins une deuxième partie de solidarisation de bras, lesdites première et deuxième parties de solidarisation de bras étant appropriées pour être mutuellement engagées pour solidariser lesdits premier et deuxième bras manipulateurs (1, 2) l'un à l'autre, et dans lequel l'étape e0) prévoit de solidariser géométriquement les premier (1) et deuxième bras manipulateurs (2) au moyen de l'engagement mutuel entre lesdites première et deuxième parties de solidarisation de bras.

10. Procédé d'assemblage selon l'une quelconque des revendications précédentes, dans lequel, une fois assemblé, l'ensemble de jonction (402) et le composant de réception (401) forment un ou plusieurs sièges d'insertion de rivets appropriés pour recevoir un ou plusieurs rivets (45) pour relier l'ensemble de jonction (402) de manière articulée au composant de réception (401), et dans lequel le procédé d'assemblage comprend, après l'étape e), les étapes de fonctionnement suivantes :
h) prévoir un appareil de rivetage (8) comprenant une riveteuse (81), et alimenter ledit appareil de rivetage (8) avec un ou plusieurs rivets (45) ;
i) relier, au moyen de ladite riveteuse (81), l'ensemble de jonction (402) de manière articulée dans le composant de réception (401) au moyen de l'insertion dudit ou desdits rivets (45) dans ledit ou lesdits sièges d'insertion de rivets.

11. Poste d'assemblage (9) pour assembler des articles à composants multiples (4) à partir d'un premier sous-ensemble (412), d'un deuxième sous-ensemble (434) et d'un composant de réception (401), ledit poste d'assemblage (9) comprenant :
- un premier bras manipulateur (1) approprié pour saisir ledit premier sous-ensemble (412) dans une zone de saisie respective ;
- un deuxième bras manipulateur (2) approprié pour saisir ledit deuxième sous-ensemble (434) dans une zone de saisie respective ;
- un dispositif de préhension (70) approprié pour recevoir un composant de réception (401) ayant un siège de réception (40) approprié pour recevoir un ensemble de jonction (402) comprenant ledit premier sous-ensemble (412) et ledit deuxième sous-ensemble (434) ; **caractérisé en ce qu'**il comprend en outre :
- une unité de commande électronique fonctionnellement reliée auxdits premier et deuxième bras manipulateurs (1, 2), ladite unité de commande électronique étant appropriée pour envoyer un signal de translation synchrone auxdits premier et deuxième bras manipulateurs (1, 2) ;
lesdits premier et deuxième bras manipulateurs (1, 2) étant appropriés pour assembler lesdits sous-ensembles (412, 434) pour former un ensemble de jonction (402) et étant appropriés pour être actionnés en translation en fonction dudit signal de translation synchrone, et pour effectuer une translation solidaire vers ledit dispositif de préhension (70) pour amener ledit ensemble de jonction (402) au siège de réception (40) dudit composant de réception (401).

12. Poste d'assemblage selon la revendication précédente, comprenant un premier groupe de pré-assemblage (91) approprié pour pré-assembler un premier composant (41) et un deuxième composant (42) afin de fabriquer le premier sous-ensemble (412), et comprenant une deuxième unité de préassemblage (92) appropriée pour pré-assembler un troisième composant (43) et un quatrième composant (44) afin de fabriquer le deuxième sous-ensemble (434).

13. Poste d'assemblage (9) selon la revendication 11 ou 12, dans lequel le premier bras manipulateur (1) comprend une première partie de solidarisation de bras, et dans lequel le deuxième bras manipulateur (2) comprend une deuxième partie de solidarisation de bras, lesdites première et deuxième parties de solidarisation de bras pouvant être mutuellement engagées pour solidariser ledit premier bras manipulateur (1) et ledit deuxième bras manipulateur (2) l'un à l'autre.

14. Poste d'assemblage (9) selon l'une quelconque des revendications 11 à 13, dans lequel les premier (1) et deuxième bras manipulateurs (2) sont appropriés pour effectuer mutuellement une translation solidaire le long d'une direction verticale (Z) perpendiculaire à une surface de travail (700) sur laquelle le dispositif de préhension (70) est positionné.

15. Poste d'assemblage (9) selon l'une quelconque des revendications 11 à 14, dans lequel le premier bras manipulateur (1) et le deuxième bras manipulateur (2) comprennent chacun un groupe d'actionnement respectif (13, 23) approprié pour actionner en translation le bras manipulateur respectif (1, 2) et dans lequel l'unité de commande électronique est appropriée pour activer un seul desdits groupes d'actionnement (13, 23) pour générer la translation solidaire desdits premier et deuxième bras manipulateurs (1, 2) vers le siège de réception (40).

16. Ligne d'assemblage comprenant un poste d'assemblage selon l'une quelconque des revendications 11 à 15.
